# EUROPEAN PATENT SPECIFICATION

(11) **EP 1 299 232 B1**
(45) Date of publication and mention of the grant of the patent: **01.02.2012**
(21) Application number: 01963712.3
(22) Date of filing: 21.05.2001
(51) Int. Cl.: B32B 7/06, B32B 7/12, B65C 1/00, B65C 7/00

(54) **SYSTEM FOR APPLYING LABELS**
SYSTEM ZUM AUFBRINGEN VON SELBSTKLEBEETIKETTEN
SYSTEME D'APPLICATION D'ETIQUETTES

(30) Priority: 22.05.2000 US 575396
(43) Date of publication of application: 09.04.2003
(73) Proprietor: AVERY DENNISON CORPORATION, Pasadena, CA 91103 (US)
(72) Inventor: DO, Sung, CA 91784 (US); HODSDON, Jerry, G., Forestdale, MA 02644 (US); WONG, Galen, C., South Pasadena, CA 91030 (US)
(74) Representative: Hallam, Arnold Vincent
(86) International application number: PCT/US2001/016414
(87) International publication number: WO 2001/089825

(56) References cited:
- EP-A- 0 418 608
- EP-A- 0 594 504
- WO-A-98/29313
- DE-U1- 29 800 751
- US-A- 3 885 070
- US-A- 3 924 744
- US-A- 4 478 666
- US-A- 4 584 219
- US-A- 5 182 152
- US-A- 5 227 209
- US-A- 5 462 783
- US-A- 5 484 168
- US-A- 5 881 597
- US-A- 5 947 525
- US-A- 6 054 009

## Description

### Background of the Invention

The present invention relates to sheet constructions, systems and methods for applying labels to tabs of divider sheets, to tabs of file folders, to envelopes and the like.

One known label application method and system is provided in the INDEXMAKER Clear Label Dividers product available from Avery Dennison Corporation of Pasadena, California. This product includes a sheet having columns of clear labels thereon attached with adhesive to a releasable liner sheet. The clear tab labels are formatted using preset layouts and existing word processing software. The tab titles are printed onto the clear label sheet using laser or inkjet printers. The printed tabs are then manually peeled off from the sheet and individually applied to the divider tabs. This system allows the user to individually custom design and print each of the tabs with the desired indicia. The clear labels virtually disappear on the divider tabs giving the dividers a clean, professional look. Formatting can use preset layouts and existing software programs such as MICROSOFT Word for Windows, COREL Word Perfect for Windows, COREL Word Perfect for DOS, LOTUS Word Pro, and LOTUS AMI Pro. The following U. S. Patents are related to this prior art product: U. S. Patent Nos. 5,135,261,5,340,427 and 5,389,414. Application of these labels can be time consuming, clumsy and subject to error, since they must be separated and then attached individually to the corresponding divider tabs. In the process of individually applying them, they often are not applied evenly or properly with the divider tab sheets. In other words, the above-described INDEXMAKER product has the problem that the labels are difficult and time consuming to remove from the backing sheet and to place and align on the tabs so they are straight. They are also small and cumbersome to handle.

Accordingly, a method for remedying these problems was designed and provided in U. S. Patent No. 5,947,525 to Pollman. The Pollman patent teaches using at least one set of precut labels removably attached to carrier strips that are removably secured to a backing sheet. The precut labels are spaced apart on the carrier strips to align substantially on the tabs on the divider sheets. The user can separate a carrier strip and precut labels affixed thereto from the packing sheet, place and align the carrier strip across the divider sheet such that the precut labels are placed on the tabs of the divider sheets. He then pulls the carrier sheet upwardly and away from the divider sheet such that the precut labels separate from the carrier strip and remain on the divider's tabs. This system, while an improvement in certain respects over the prior art, has the disadvantage that the strips are typically flimsy and difficult to properly align. Additionally, the carrier strip can be sticky and thus may stick to unwanted surfaces.
Other known prior art includes: EP0418608 which discloses a sheet of labels each with a "handle" of lining sheet that comes away with the label so that each label can be individually manipulated without needing to hold the adhesive surface; EP 0594504 discloses a strip of labels, each of which labels has an acknowledgement receipt label incorporated into it that retains its lining layer when it is removed from the strip together with the label; WO98/29313 discloses a system for applying labels to CD's or DVD's that has individual label sheets, each label of which has two removable handles on either side which can be used for moving the label once removed from its backing layer so that its adhesive underside is exposed and US6,054,009 discloses a very similar label; and DE29800751 discloses a CD/DVD label which has a backing layer removable in two parts so that the label with one backing part removed can be moved into position and adhesion commenced and, once in position and partially adhered the remaining part of the backing layer can be removed.

### Summary of the Invention

The present invention provides a label applicator construction, comprising: a liner sheet; facestock attached to the liner sheet; the facestock including at least one weakened separation line defining at least a portion of perimeters of a facestock label and a facestock handle portion; the facestock label and the handle portion being removable as a unit from the liner sheet; and the handle portion being separable from the facestock label with the facestock label adhered in a desired position on an article.

Advantageously, the liner sheet includes at least one weakened separation line defining at least a portion of a perimeter of a liner sheet portion on the handle portion of the unit.

Advantageously, a liner sheet portion of the liner sheet is adhered to the handle portion and is removable from the liner sheet as part of the unit.

Advantageously, at least one cut line in the liner sheet defines at least a portion of a perimeter of the liner sheet portion.

Advantageously, the at least one cut line penetrates the liner sheet but not the facestock.

Advantageously, the liner sheet portion is smaller than the handle portion.

Advantageously, the handle portion is larger than the liner sheet portion and defines a frame around the liner sheet portion.

Advantageously, a separation line having at least one tie separates the handle portion from the facestock label, and the at least one tie is adapted to be broken by a user to separate the handle portion from the facestock label with the facestock label in the desired position.

Advantageously, the facestock label has an elongate configuration having an elongate side and an end.

Advantageously, the handle portion is attached to and extends out from the end.

Advantageously, the handle portion is attached to and extends out from the side.

Advantageously, the facestock label has an elongate configuration having first and second ends, the handle portion defines a first handle portion extending out from the first end, and the facestock includes a second handle portion extending out from the second end.

Advantageously, the facestock label defines a first facestock label, the handle portion defines a first handle portion, the facestock further includes a second facestock label and a second handle portion, the second facestock label and the second handle portion are manually removable from the liner sheet as a connected unit and the second handle portion is separable from the second facestock label with the second facestock label adhered in a desired position to an article.

Advantageously, the liner sheet includes a liner sheet portion which is adhered to the second handle portion and is removable from the liner sheet as part of the connected unit.

Advantageously, the liner sheet includes a first liner sheet portion attached to the first handle portion and a second liner sheet portion attached to the second handle portion.

Advantageously, the second liner sheet portion is separable along a weakened separation line from the second facestock label with the second facestock label in the desired position.

Advantageously, the facestock label has an ink and/or toner receptive surface.

Advantageously, the facestock is an ink and/or laser receptive topcoated facestock which is laminated via pressure sensitive adhesive to the liner sheet.

Advantageously, the facestock is attached to the liner sheet with adhesive, and the facestock label is adhered with the adhesive in the desired position.

Advantageously, the facestock includes first and second facestock sheets attached to the liner sheet with a gap therebetween, and the liner sheet includes a weakened separation line extending along the gap so that the construction can be separated into two pieces.

Advantageously, the facestock includes a weakened separation line separating the handle portion and the facestock label.

Advantageously, the liner sheet includes a portion to which the facestock label is directly adhered before being removed and the facestock label is peeled off of the portion when removed as the unit.

Advantageously, the facestock label defines a first facestock label, the handle portion defines a first handle portion, the unit defines a first unit, and the facestock label includes a second facestock label and a second facestock handle portion, the second facestock label and the second handle portion being removable as a second unit from the liner sheet.

The present invention further provides a label applicator construction comprising: a liner sheet; facestock attached to the liner sheet, the facestock including at least one facestock weakened separation line defining at least in part a plurality of aligned facestock labels; the liner sheet including at least one liner sheet weakened separation line at least in part separating the liner sheet into a removable liner strip and a liner body portion; and the liner strip when in a separated position being separated from the liner body portion and backsides of the facestock labels being exposed such that the liner body portion can be manipulated such that the facestock labels are in desired positions relative to at least one surface and the facestock labels applied to the at least one surface.

Advantageously, the liner strip includes liner sheet portions adhered to respective ones of the facestock labels before the liner strip is positioned in the separated position.

Advantageously, the liner strip includes a liner sheet bar to which the liner sheet portions are connected.

Advantageously, the facestock includes ties which connect the labels together when on the liner sheet and allow the labels to be separated to position them in the separated position.

Advantageously, the liner sheet weakened separation line is a die cut line.

Advantageously, the facestock weakened separation line is a die cut line.

Advantageously, the at least one surface includes staggered tabs of a stack of tabbed divider sheets.

Advantageously, that at least one surface includes staggered tabs of a stack of file folders.

Advantageously, the liner sheet and the facestock together define a pressure sensitive laminate material.

Advantageously, releasable adhesive attaches the facestock to the liner sheet.

Advantageously, the facestock labels are ink and/or laser receptive.

Advantageously, the liner sheet is a release coated paper liner sheet.

Advantageously, the facestock is an ink and/or laser receptive topcoated facestock which is laminated via pressure sensitive adhesive to the liner sheet.

Advantageously, top edges of each of the facestock labels are freestanding and unattached when the liner strip is in the separated position.

Advantageously, the liner sheet and the facestock form a laminate construction that can be passed through a printer and desired indicia printed on the labels before the liner strip is removed to the separated position.

Advantageously, the plurality of aligned facestock labels defines a plurality of aligned facestock first labels aligned in a first line, the removable liner strip defines a first liner strip, the liner body portion defines a first liner body portion, the facestock includes a plurality of aligned facestock second labels aligned in a second line spaced from and parallel to the first line, the liner sheet includes a removable second liner strip disposed substantially between the aligned facestock first and second lines of labels.

Advantageously, the first liner body portion includes the second liner body portion.

Advantageously, a portion of the facestock is adhered to the removable liner strip and is removable therewith relative to the liner body portion.

Advantageously, the aligned facestock labels are interconnected by thin facestock necks which are breakable by a user to separate the facestock labels.

Advantageously, the liner strip includes a plurality of protruding portions to which respective facestock labels are adhered before the liner strip is in the separated position.

The present invention further provides a label applicator construction, comprising: a liner sheet; facestock attached to the liner sheet with adhesive, the facestock including a plurality of aligned facestock labels; the liner sheet including a removable liner strip and a liner body portion; and the liner strip when in a separated position being separated from the liner body portion and backsides of the facestock labels thereby being exposed whereby the liner body portion can be manipulated such that the facestock labels are in desired positions relative to at least one surface and the facestock labels can be applied with the adhesive on the backsides ofthe facestock labels to the at least one surface in the desired positions.

Advantageously, the facestock includes an ink and/or laser receptive facestock sheet and the liner sheet is a release coated paper liner sheet.

The present invention further provides a label applicator construction, comprising: a liner sheet; facestock attached to the liner sheet, the facestock including at least one facestock weakened separation line defining at least in part a plurality of aligned facestock labels; the liner sheet including a liner strip and a liner body portion; the liner strip being positionable in an attached position on the facestock labels and in an alternative removedposition removed from the facestock labels; and the liner strip when in the removed position exposing bottom surfaces of the labels such that the labels can be removed and applied in alignment to at least one surface.

Advantageously, the construction further comprises adhesive which adheres the liner strip to the facestock labels when the liner strip is in the attached position and which also adheres the labels to the at least one surface when the labels are applied in alignment thereto.

Advantageously, the strip is configured with serially- connected strip portions interconnected by thin necks, each of the strip portions being attached on a respective one of the labels when the strip is in the attached position.

Advantageously, each ofthe strip portions has substantially the same size and shape as its respective label.

Advantageously, each of the strip portions is slightly larger than its respective label.

Advantageously, the liner body portion defines a handle for a user to grasp to maneuver the labels into position relative to the surface for application thereto.

Advantageously, the construction further comprises adhesive adhering the facestock to the liner sheet.

Advantageously, the adhesive is removable or repositionable adhesive.

Advantageously, the liner strip defines a first liner strip, the plurality of aligned facestock labels defines apluralityofaligned first facestock labels, the facestock includes a plurality of aligned second facestock labels disposed parallel to and spaced from the first facestock labels, the liner sheet including a second liner strip; and the second liner strip is positioned in an attached position on the second facestock labels and in an alternative removed position removed from the second facestock labels, the second liner strip when in the removed position exposing bottom surfaces of the second facestock labels such that the second facestock labels can be removed and applied in alignment to at least one surface.

Advantageously, the liner sheet and the facestock form a laminate construction sheet, and with the labels removed and the liner strip in the removed position, a series of spaced holes through the laminate construction sheet are formed.

Advantageously, thin neck portions of the facestock uncoated with the liner sheet interconnect adjacent ones of the spaced holes.

Advantageously, the facestock includes first and second facestock portions separated by a thin space extending from side-to-side or end- to-end on the liner sheet, the liner sheet including a weakened separation line in the thin space whereby the liner sheet can be separated along the weakened separation line to define a first liner sheet portion on which the first facestock portion is attached and a separate second liner sheet portion on which the second facestock portion is attached.

Advantageously, the at least one surface includes staggered tabs of a stack of tabbed divider sheets.

Advantageously, that at least one surface includes staggered tabs ofa stack of file folders.

Advantageously, the liner sheet and the facestock together define a pressure sensitive laminate material.

Advantageously, releasable adhesive attaches the facestock to the liner sheet.

Advantageously, the facestock labels are ink and/or laser receptive.

Advantageously, the liner sheet is a release coated paper liner sheet.

Advantageously, the facestock is an ink and/or laser receptive topcoated facestock which is laminated via pressure sensitive adhesive to the liner sheet.

Advantageously, the facestock labels have ink and/or toner receptive surfaces.

The present invention further provides a label applicator construction, comprising: facestock including a plurality of aligned facestock labels; a liner sheet assembly including at least first and second liner strips separable from one another; the liner sheet assembly being adhered to the facestock; the first liner strip being separable relative to the facestock to a separated position adhesive backsides of the facestock labels are in exposed positions; and with the facestock labels in the exposed positions, the liner sheet assembly including the second liner strip can be manipulated by a user into a desired position relative to at least one surface and the facestock labels separated from one another and adhesively applied to the at least one surface.

Advantageously, the first liner strip is separable to the separated position after the construction has been passed through a printer and indicia printed on top surfaces of the facestock labels.

Advantageously, the facestock labels when in the exposed positions are attached to adjacent portions of the facestock only by breakable ties.

Advantageously, the facestock labels when in the exposed positions are positioned along and extend out from an edge of the liner sheet.

Advantageously, at least one die cut line separates the first liner strip from the second liner strip.

Advantageously, adhesive on the facestock assembly holds the first and second liner strips together until the first liner strip is separated to the separated position.

Advantageously, the facestock includes a first facestock strip adhered to the first liner strip and a second facestock strip adhered to the second liner strip.

Advantageously, the liner sheet assembly includes a first liner sheet portion which includes the first and second liner strips, a second liner sheet portion and a weakened separation line separating the first and second liner sheet portions.

Advantageously, the facestock labels have ink and/or toner receptive surfaces.

The present invention further provides a label applicator construction, comprising: a liner sheet; facestock attached with adhesive to the liner sheet; at least one liner sheet cut line through the liner sheet but not the adj acent facestock; at least one facestock cut line through the facestock but not through the liner sheet; the at least one facestock cut line defining at least a portion of perimeters of facestock labels; and the liner sheet cut lines allowing separation of a portion of the liner sheet from another portion to thereby assist a user in positioning the facestock labels at desired locations on at least one surface and adhered thereto with the adhesive.

Advantageously, the at least one facestock cut line defines at least a portion of a perimeter of a facestock handle portion adjacent to one of the facestock labels and removable from the facestock as a unit and subsequently separable therefrom.

Advantageously, the at least one liner sheet cut line defines at least a portion of a perimeter of liner sheet handle portion attached to the facestock handle portion and forming part of the unit.

Advantageously, the facestock labels before separation are aligned with one another, and the at least one liner sheet cut line defines a liner sheet backing strip attached to backsides of the aligned facestock labels and removable therefrom to expose backsides of the facestock labels.

Advantageously, the at least one liner sheet cut line separates the liner sheet into a removable liner strip and a liner body portion, the removable liner strip when separated from the liner body portion exposes backsides of the facestock labels.

Advantageously, adhesive is a pressure sensitive adhesive, and the facestock is an ink and/or laser receptive topcoated facestock sheet which is laminated via the adhesive to the liner sheet.

Advantageously, with the liner sheet portion separated from the another liner sheet portion, the facestock labels are serially interconnected with breakable facestock thin connector strips.

Advantageously, the at least one facestock cut line defines a facestock handle portion adjacent one of the facestock labels and separable therewith as a unit from the liner sheet.

Advantageously, the at least one liner sheet cut line defines a liner sheet portion attached to the facestock handle portion and forming part of the separable unit.

Advantageously, the at least one facestock cut line defines a weakened separation line between the facestock handle portion and the adjacent facestock label and allowing separation of the facestock handle portion from the adjacent facestock label after the unit has been separated.

Advantageously, the facestock labels have ink and/or toner receptive surfaces.

Advantageously, each of the facestock labels has a rectangular shape with rounded corners.

Advantageously, whrein the facestock is a printable polyester film or Mylar.

The present invention further provides a label applicator method, comprising: providing a liner sheet having facestock attached thereto; the facestock including a facestock label and a facestock handle portion; removing the facestock label and facestock handle portion as a unit from the liner sheet; and after the removing, adhering the facestock label in a desired position on an article.

Advantageously, after the adhering, the facestock handle portion is separated from the facestock label.

Advantageously, the separating includes tearing along a weakened separation line separating the facestock handle portion from the facestock label.

Advantageously, the liner sheet includes a liner sheet portion which is attached to the facestock handle portion and forms part of the unit.

Advantageously, the removing and adhering include grasping the liner sheet portion.

Advantageously, the method further comprises before the removing, printing indicia on the facestock label.

Advantageously, the printing includes passing the liner sheet and attached facestock through a printer or copier.

Advantageously, the facestock handle portion is releasable attached along a long edge of the facestock label.

Advantageously, the facestock handle portion is releasably attached along a short end of the facestock label.

Advantageously, the facestock handle portion defines a first handle portion, the short end defines a first short end, the facestock label has a second short end opposite to the first short end and the facestock includes a second facestock handle releasably attached along the second short end and forming part of the unit.

Advantageously, the liner sheet includes first and second liner sheet portions attached to the first and second facestock handles, respectively, and forming part of the unit, and the method further comprises after or concurrently with the adhering, separating the first and second liner sheet portions and the first and second facestock handles from the facestock label.

Advantageously, the facestock label defines a first facestock label, the facestock includes a second facestock label, and before the removing, passing the facestock and liner sheet through a printer and printing first indicia on the first facestock label and second indicia on the second facestock label.

The present invention further comprises a label applicator method, comprising: providing a liner sheet and facestock attached to the liner sheet, the facestock including a plurality of aligned facestock labels, and the liner sheet including a liner body portion and a liner strip; separating the liner strip from the liner body portion from an attached position into a separated position the facestock labels are connected to the liner body portion and backsides of the facestock labels are exposed; manipulating at least one of the liner body portion and at least one surface relative to one other such that the exposed backsides of the aligned facestock labels are in a desired position relative to the at least one surface; and with the aligned facestock labels in the desired position, applying the aligned facestock labels to the at least one surface, the applying including separating the aligned facestock labels from the liner body portion.

Advantageously, the method further comprises before the separating, passing the liner sheet and facestock through a printer or copier and printing indicia on the facestock labels.

Advantageously, the method further comprises before the manipulating, printing indicia on the facestock labels.

Advantageously, the strip includes with the liner strip in the attached position, liner sheet portions adhered to the backsides ofrespective ones of the facestock labels, and a liner sheet bar to which the liner sheet portions are connected.

Advantageously, with the liner strip in the attached position the facestock is attached to the liner sheet with adhesive, and the applying uses the adhesive.

Advantageously, the at least one surface includes staggered tabs of a stack of tabbed divider sheets.

Advantageously, with the liner strip in the separated position, top edges of each of the facestock labels are freestanding and unattached.

Advantageously, the at least one surface includes staggered tabs of file folders.

Advantageously, the applying includes manually pressing each ofthe facestock labels to the at least one surface, and the separating includes breaking ties attaching the facestock labels to adjacent portions of the facestock.

Advantageously, the plurality of aligned facestock labels defines a plurality of first aligned facestock labels aligned in a first line, the liner strip defines a first liner strip, the liner body portion defines a first liner body portion, the facestock includes a plurality of second aligned facestock labels aligned in a second line spaced from and parallel to the first liner, the liner sheet includes a second liner strip disposed substantiallybetween the aligned first and second lines of labels, and the method further comprises after the applying, removing the second liner strip and applying the second aligned facestock labels.

Advantageously, the method further comprises before the applying steps, passing the facestock and liner sheet through a printer or copier and printing indicia on the first and second facestock labels.

The present invention further comprises a label applicator method, comprising: providing a liner sheet assembly adhered to facestock, the facestock including a plurality of aligned first facestock labels and a plurality of aligned second facestock labels, the liner sheet assembly including first and second liner sheet strips separable from one another, the first liner sheet strip being in an attached position attached to the first facestock labels, and the second liner sheet strip being in an attached position attached to the second facestock labels; removing the first liner sheet strip from the attached position to expose backsides ofthe first facestock labels; manipulating at least one of the liner sheet assembly and at least one surface relative to the other such that the exposed backsides of the first facestock labels are in desired positions relative to the at least one surface; and with the first facestock labels in the desired positions, applying the first facestock labels to the at least one surface, the applying including separating the first facestock labels from the facestock and from each other.

Advantageously, the method further comprises: after the applying step, removing the second liner sheet strip from the attached position to expose backsides of the second facestock labels; manipulating at least one of the liner sheet assembly and at least one second surface relative to the other such that the exposed backsides of the second facestock labels are in desired positions relative to the at least one second surface; and with the second facestock labels in the desired positions, applying the second facestock labels to the at least one second surface, the second facestock labels applying including separating the second facestock labels from the facestock and from each other.

Advantageously, the method further comprises before the first facestock labels applying step, printing indicia on the first and second facestock labels.

Advantageously, the removing includes peeling the first liner sheet strip offofthe facestock.

Advantageously, the at least one surface includes a stack ofstaggered tabs of file folders or index divider sheets.

Advantageously, the liner sheet assembly is adhered with adhesive to the facestock, and the applying uses the adhesive.

Advantageously, the first facestock labels are spaced and separated from one another with thin strips of the facestock, and the first facestock labels are in a line spaced from and parallel to a line of the second facestock labels.

Advantageously, the manipulating includes holding the liner sheet assembly and manipulating it relative to the at least one surface.

The present invention further provides a method of constructing a label applicator construction, comprising: attaching facestock with adhesive to a liner sheet; after the attaching, forming cut lines through the facestock but not the liner sheet to form a plurality of facestock labels; and after the attaching, forming cut lines through the liner sheet but not the facestock to form liner sheet portions to assist in adhering the facestock printable labels to desired surfaces with the adhesive.

The present invention further provides a label applicator system, comprising: a holder for holding a plurality of sets of file folders, tab dividers or the like, each ofthe sets having aligned staggered tabs, the sets being held in stair-step relationship with the staggered tabs being exposed and parallel.

Advantageously, the holder comprises a plurality of connected staggered pockets each for holding a separate one of the sets.

Advantageously, the system further comprises a label applicator sheet having a plurality of labels, the labels being aligned in rows, such that with the sheet on top of the sets in the holder, labels of each row are positioned on respective tabs of a respective set.

Advantageously, the sheet includes a liner sheet and facestock adhered to a top of the liner sheet, the facestock sheet having weakened separation lines defining the labels, and the liner sheet having liner sheet positions removable to expose adhesive coated backs of the labels.

Advantageously, the liner sheet portions comprise liner sheet strips for each row of labels.

Advantageously, the holder comprises a pouch having a plurality of pockets each for holding a separate one of the sets.

Advantageously, the facestock sheet weakened lines allow separation ofa portion of the facestock from another portion of the facestock.

The present invention further comprises a label applicator construction, comprising: a liner sheet; facestock attached to the liner sheet; the facestock including at least one weakened separation line defining at least a portion ofperimeters of a facestock label and a facestock handle portion; the facestock including at leastone weakened facestock line separating the facestock handle portion from the facestock label; the liner sheet including at least one weakened liner-sheet line defining at least a portion of a liner sheet patch on the handle portion, the patch positioned entirely on the side ofthe facestock handle portion of the at least one weakened facestock line; the facestock label and the handle portion being removable from the liner sheet with the liner sheet patch on the handle portion and thereby exposing adhesive on a back surface of the facestock label; and the handle portion being separable along the at least one weakened facestock line and as a unit with the liner sheet patch adhered to the handle portion, from the facestock label with the facestock label adhered with the adhesive in a desired position on an article; a liner sheet portion of the liner sheet is adhered to the handle portion and is removable from the liner sheet as part of the unit.

The present invention further provides a label applicator construction, comprising: a liner sheet; facestock attached with adhesive to the liner sheet; at least one liner sheet weakened line through the liner sheet but not the facestock adjacent thereto; at least one facestock weakened line through the facestock but not through the liner sheet; the at least one facestock weakened line defining at least a portion ofperimeters of facestock labels; and the liner sheet weakened lines allowing separation of a portion ofthe liner sheet from another portion to thereby assist a user in positioning the facestock labels at desired locations on at least one surface and adhered thereto with the adhesive; the facestock sheet weakened lines allow separation of a portion of the facestock from another portion of the facestock.

Advantageously, the at least one facestock weakened line defines at least a portion of a perimeter of a facestock handle portion adjacent to one of the facestock labels and is removable from the facestock as a unit and subsequently separable therefrom.

Advantageously, the at least one liner sheet weakened line defines at least a portion of a perimeter of liner sheet handle portion attached to the facestock handle portion and forming part of the unit.

Advantageously, the facestock labels before separation are aligned with one another, and the at least one liner sheet weakened line defines a liner sheet backing strip attached to backsides of the aligned facestock labels and removable therefrom to expose backsides of the facestock labels.

Advantageously, the at least one liner sheet weakened line separates the liner sheet into a removable liner strip and a liner body portion, the removable liner strip when separated from the liner body portion exposes backsides of the facestock labels.

Advantageously, the adhesive is a pressure sensitive adhesive, and the facestock is an ink and/or laser receptive topcoated facestock sheet which is laminated via the adhesive to the liner sheet.

Advantageously, when the liner sheet portion is separated from the another liner sheet portion, the facestock labels are serially interconnected with breakable facestock thin connector strips.

Advantageously, the at least one liner sheet weakened line defines a liner sheet portion attached to the facestock handle portion and forming part of the separable unit.

Advantageously, the at least one facestock weakened line defines a facestock handle portion adjacent one of the facestock labels and separable therewith as a unit from the liner sheet.

Advantageously, the at least one facestock weakened line defines a weakened separation line between the facestock handle portion and the adjacent facestock label and allowing separation of the facestock handle portion from the adjacent facestock label after the unit has been separated.

Advantageously, the facestock labels have ink and/or toner receptive surfaces.

Advantageously, each of the facestock labels has a rectangular shape with rounded corners.

Advantageously, the facestock is a printable polyester film or Mylar.

Advantageously, the facestock sheet weakened lines are die cut.

The present invention further provides a label applicator method, comprising: providing a liner sheet having facestock attached thereto, the facestock including a face stock label and a face stock handle portion, the face stock including at least one weakened separation line defining at least a portion of perimeters of the facestock label and the face stock handle portion, the face stock further including at least one weakened facestock line separating the facestock handle portion from the facestock label, the liner sheet including at least one weakened liner-sheet line defining at least a portion of a liner sheet patch on the handle portion, the patch positioned entirely on the side of the facestock handle portion of the at least one weakened facestock line, the facestock label and the handle portion being removable from the liner sheet with the liner sheet patch on the handle portion and thereby exposing adhesive on a back surface of the facestock label, the handle portion being separable along the at least one weakened facestock line and as a unit with the liner sheet patch adhered to the handle portion from the facestock label with the facestock label adhered with the adhesive in a desired position on an article; removing the facestock label and facestock handle portion as a unit from the liner sheet; and after the removing, adhering the facestock label in a desired position on an article.

Advantageously, the facestock handle portion is releasably attached along a short end of the facestock label.

Advantageously, the facestock label defines a first facestock label, the facestock includes a second facestock label, and before the removing, passing the facestock and liner sheet through a printer and printing first indicia on the first face stock label and second indicia on the second facestock label.

The present invention further provides a label applicator method, comprising: providing a liner sheet and facestock attached to the liner sheet, at least one liner sheet weakened line through the liner sheet but not the adjacent facestock, at least one facestock weakened line through the facestock but not through the liner sheet, the at least one facestock weakened line defining at least a portion of perimeters of facestock labels, the liner sheet weakened lines allowing separation of a portion of the liner sheet from another portion and the facestock sheet weakened lines allowing separation of a portion of the facestock sheet from another portion, thereby assisting a user in positioning the facestock labels at desired locations on at least one surface and adhered thereto with the adhesive the facestock, including a plurality of aligned facestock labels, and the liner sheet including a liner body portion and a liner strip;
separating the liner strip from the liner body portion from an attached position into a separated position wherein the facestock labels are connected to the liner body portion and backsides of the facestock labels are exposed;
manipulating at least one of the liner body portion and at least one surface relative to one other such that the exposed backsides of the aligned facestock labels are in a desired position relative to the at least one surface; and
with the aligned facestock .labels in the desired position, applying the aligned facestock labels to the at least one surface, the applying including separating the aligned face stock labels from the liner body portion.

Advantageously, the portion of the liner sheet and the portion of the facestock label are adhered together when separated from the another portion of the liner sheet and the another portion of the face stock sheet.

Advantageously, the face stock labels are all positioned and adhered to the at least one surface at the same time.

Advantageously, with the liner strip in the separated position, top edges of each ofthe facestock labels are freestanding and unattached.

Advantageously, the applying includes manually pressing each of the facestock labels to the at least one surface, and the separating includes breaking ties attaching the facestock labels to adjacent portions of the facestock.

Advantageously, the at least one surface includes staggered tabs of file folders.

Advantageously, the applying includes manually pressing each of the facestock labels to the at least one surface, and the separating includes breaking ties attaching the facestock labels to adjacent portions of the facestock.

Advantageously, the plurality of aligned facestock labels defines a plurality of first aligned facestock labels aligned in a first line, the liner strip defines a first liner strip, the liner body portion defines a first liner body portion, the facestock includes a plurality of second aligned facestock labels aligned in a second line spaced from and parallel to the first liner, the liner sheet includes a second liner strip disposed substantially between the aligned first and second lines of labels, and further comprising after the applying, removing the second liner strip and applying the second aligned facestock labels.

Advantageously, the method further comprises before the applying steps, passing the facestock and liner sheet through a printer or copier and printing indicia on the first and second facestock labels.

Advantageously, the at least one surface includes staggered tabs of file folders and the applying includes manually pressing each ofthe face stock labels onto the staggered tabs of file folders, and the separating includes breaking ties attaching the facestock labels to adj acent portions of the facestock.

Accordingly, directed to remedying the disadvantages of the prior art, various label applicator constructions are provided herein. Each includes facestock adhered with releasable adhesive to a liner sheet. Die cut lines are made through the facestock but not through the liner sheet; and die cut lines are made through the liner sheet but not the facestock. Portions of the label sheet are then stripped away. Using different patterns of the die cut lines or other weakened separation lines and stripped away portions, the different label applicator constructions are formed. Each is a sheet construction with a plurality of small elongate labels formed from the liner sheet and releasably held to the facestock. The sheet construction is passed through a printer and the desired indicia printed on the labels. The printed labels are then ready for easy controlled removal and application by the user to tabs of index dividers, file folders or the like.

According to one definition of the invention, the label sheet is die cut on both the face and liner to facilitate the application of labels onto the dividers and file folders. The label sheet has die cuts that are oriented thereon to allow them to be aligned with either one or more sets of dividers or sets of file folders. The liner is die cut so that a strip can be removed directly from behind the labels, exposing the adhesive side of the labels.

The labels are also temporarily held onto the remainder of the sheet by small ties.

Removal of the liner from the label sheet allows the user to align the tabs over the substrate using the rest ofthe label sheet as a carrier. The application ofthe labels is followed by removal of the label sheet that breaks the ties, leaving just the labels on the substrate. The label applicator construction includes a pressure sensitive laminate material die cut on both the face and liner and sheeted to a standard-size sheet. The facestock of the pressure sensitive laminate material can be either paper or coated film that is toner or ink receptive. The adhesive can be permanent or removable, depending on the level of adhesion needed for the end user.

A first construction/method ofthe invention is for applying multiple labels on tab dividers/file folders. The label sheet includes die cuts that are oriented on the sheet in a way that allows them to be aligned with the set of tabs if a set of dividers were stacked on top of each other. The liner is die cut so that a strip, positioned directly behind the labels, can be removed, exposing the adhesive side of the labels. The labels are also temporarily held on the label sheet by small ties. The removal of the liner from the label sheet allows the user to align the tabs over the divider set using the label sheet as a carrier. Once the labels are affixed to the tabs, the user pulls away the label sheet to break the ties, leaving only the labels affixed to the tabs.

An alternate method for placing multiple label on tab dividers/file folders uses a label sheet which includes labels arranged in a way similar to the first method. In this method, the liner is die cut in the shape of the row of labels. The labels are exposed by removing the strip of liner directly behind the labels. Next, a set of dividers is placed on the exposed adhesive using the outline of the removed liner as a guide. After the labels have been pressure applied to the tabs, the label sheet is pulled away, leaving the labels affixed to the tabs.

A second construction/method is for applying single labels onto substrate. In this method, individual labels are placed on the substrate one label at a time. On both short sides of the label, there are "handles" that are held onto the label by small ties. These handles are used to hold the labels over the desired position and used to align the labels. After placing the labels on the desired location, the handles are removed by pulling laterally away from the label.

An alternate construction/method uses a single "handle" on the label. In this method, individual labels are placed on the substrate by using a single handle as an alignment tool. The handles are once again held onto the labels by small ties that are designed to be broken after the label has been placed in its desired location.

A third construction/method uses multiple sets of tab dividers placed in a device that uses pouches that are tiered. A set of dividers is placed in each of the pouches. The dividers are positioned such that when a label sheet, such as the one described in the first method, is aligned with the top row of tabs, all others will also be aligned. This allows the user to label multiple sets of dividers in a single operation.

Other objects and advantages of the present invention will become more apparent to those persons having ordinary skill in the art to which the present invention pertains from the foregoing description taken in conjunction with the accompanying drawings.

### Brief Description of the Drawings

FIG. 1 is a front view of a first label applicator construction of the present invention;
FIG. 2 is a rear view of the construction of FIG. 1;
FIG. 3 is an enlarged cross-sectional view taken on line 3-3 of FIG. 1;
FIG. 4 is a perspective view of a first application step by a user of a label unit of the construction of FIG. 1;
FIG. 5 is a perspective view of a second application step;
FIG. 6 is a perspective view of a third application step;
FIG. 7 is a front view of a second label applicator construction of the present invention;
FIG. 8 is a rear view of the construction of FIG. 7;
FIG. 9 is an enlarged cross-sectional view taken on line 9-9 of FIG. 7;
FIG. 10 is a perspective view showing a first application step by a user of a label unit of the construction of FIG. 7;
FIG. 11 is a perspective view of a second application step;
FIG. 12 is a perspective view of a third application step;
FIG. 13 is a front view of a third label applicator construction of the present invention;
FIG. 14 is a rear view of the construction of FIG. 13;
FIG. 15 is an enlarged cross-sectional view taken on line 15-15 in FIG. 13;
FIG. 16 is a perspective view of a top portion of the construction of FIG. 13 showing a first step for applying a first series of printed labels thereof;
FIG. 17 is a perspective view of a second step;
FIG. 18 is a perspective view of a third step;
FIG. 19 is a perspective view of a fourth step;
FIG. 20 is a front view of a preferred alternative embodiment of the third label applicator construction;
FIG. 21 is a view similar to FIG. 20 but with dimensions indicated thereon;
FIG. 22 is a rear view the embodiment of FIG. 20 with dimensions indicated thereon;
FIG. 23 is a front view of a fourth label applicator construction of the present invention;
FIG. 24 is a rear view thereof;
FIG. 25 is an enlarged cross-sectional view taken on line 25-25 of FIG. 23;
FIG. 26 is a perspective view of the construction of FIG. 23 passing through a printer;
FIG. 27 is a perspective view of a top portion of the printed construction of FIG. 26 showing a first step for applying a first series of printed labels thereof;
FIG. 28 is a perspective view of a second step;
FIG. 29 is a perspective view of a third step;
FIG. 30 is a perspective view of a fourth step;
FIG. 31 is a partially cross-sectional view showing an envelope or pouch of the present invention holding a plurality of offset-stacked sets of dividers ready for application of printed labels from a label construction such as that of FIGS. 23 or 28; and
FIG. 32 is a schematic view showing a manufacturing process of a label applicator construction of the present invention.

### Detailed Description of Preferred Embodiments of the Invention

A number of different label applicator constructions of the present invention are disclosed herein and will now be described. Generally speaking, each is formed as a sheet construction having a liner sheet with a facestock attached to the back side thereof. One embodiment is to form the sheet construction as a laminate having an ink and/or laser receptive top coat facestock laminated with pressure sensitive adhesive to a release-coated paper liner. The facestock has weakened separation lines formed therein to define a plurality of facestock labels. And weakened separation lines in the liner sheet form the liner sheet so it can be separated into portions to assist in the proper placement of the facestock labels on the tabs of the index dividers, file folders or the like. More particularly, the weakened separation lines of the liner sheet allow the liner sheet to be separated such that one or more portions of the liner sheet can be manually handled by the user in the placement of the facestock labels so that he need not touch the labels. Additionally, the liner sheet portions thereby defined help the user properly position the facestock label(s) on the tab(s). As will become apparent from the following detailed descriptions, some of the embodiments herein allow the user to individually remove and manipulate labels and others allow for an entire line or row of labels to be essentially simultaneously applied to a line of stacked, staggered tabs in a manner that is an improvement over the problems experienced with the Pollman method.

The weakened separation liners can be formed by generally any known method. A preferred method for many of the lines is to die cut them. Each of the die cut lines typically will penetrate only one of the liner sheet or the facestock sheet. And the die cut portions of the liner sheet or facestock sheet are maintained on the label applicator sheet construction by the adhesive so that they will not separate from the sheet while the sheet is being passed through a printer or copier. Instead of die cutting, the weakened separation lines can be formed by perforated lines or other means as would be apparent to those skilled in the art.

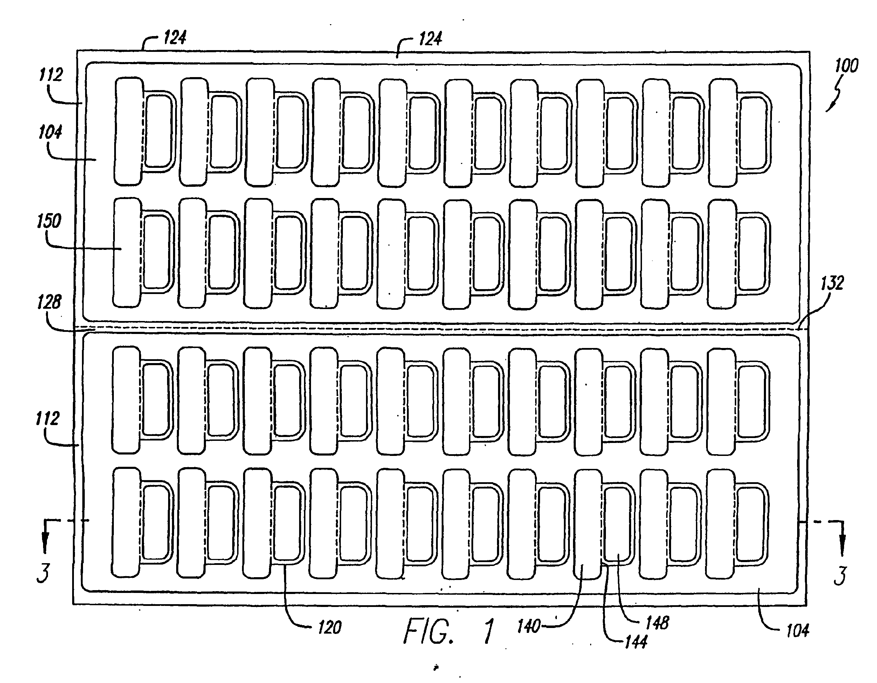

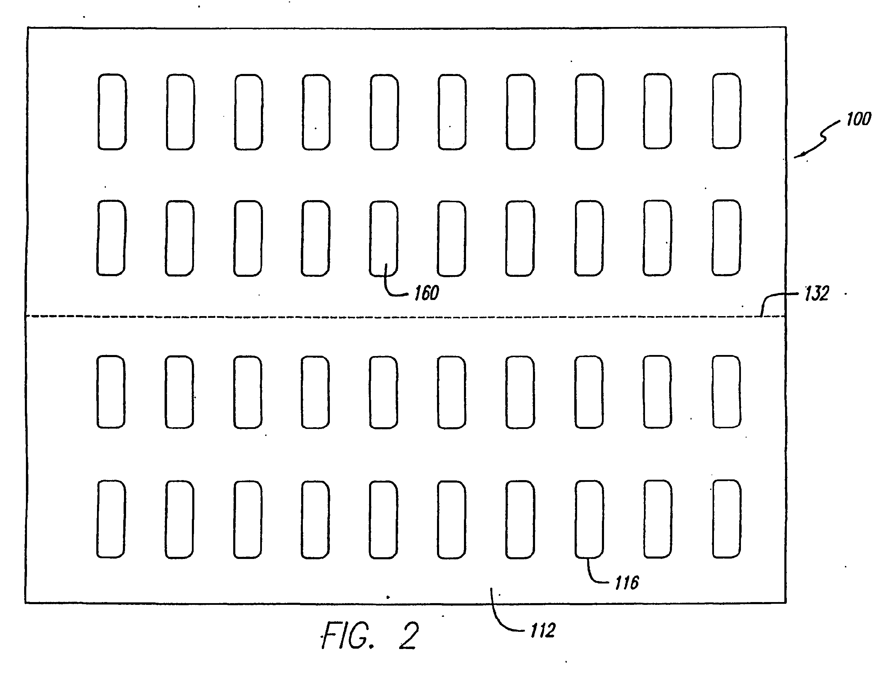

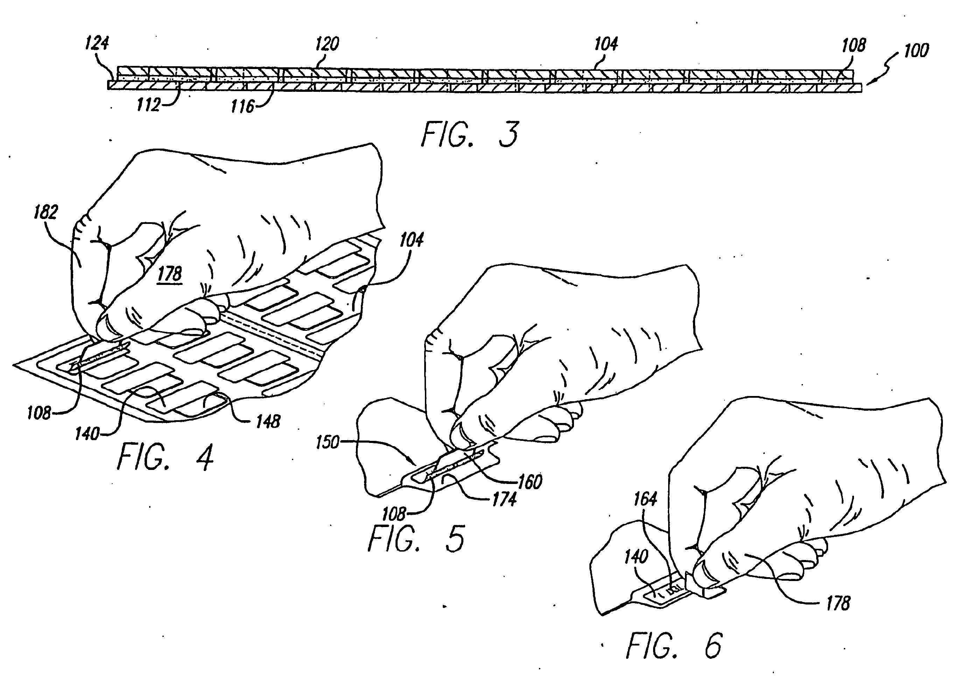

A first label applicator construction of the present invention is shown in FIGS. 1 through 6, generally at 100. It can be understood from FIG. 3 that the facestock sheet 104 is attached with adhesive 108 to the liner sheet 112. Both the liner sheet 112 and the facestock 104 have die cut lines. The pattern for the die cut lines 116 of the liner sheet 112 is best shown in FIG. 2, which is the rear view of the sheet. FIG. 1 then shows the pattern of the die cut lines 120 in the facestock 104; and as can be understood therein and also from FIG. 3, portions of the facestock have been stripped away to form the edge margins 124 of the construction. These margins are provided to reduce the curl on the label sheets. Additionally, a gutter strip 128 has been removed from the center and a perforation line 132 formed down the center of the liner sheet 112. This allows the construction 100 to be divided into two parts by the user. Two smaller label applicator construction sheets are thereby formed for passing through the printer or as may be desired by the user.

Referring to FIG. 1, the facestock sheet is cut by the die cut lines 120 into four columns of ten rows of labels. Of course, different numbers of columns and rows or different patterns (non-matrix) of the labels can be used as needed. Each of the facestock labels has a two part construction, each having a large rounded corner rectangle 140 attached with a perforated line or ties 144 to a smaller rounded corner rectangle 148. And the liner sheet is then cut to define a similar number of columns and rows of small rounded corner rectangles 160, each positioned on the back of the respective rounded corner rectangles 144 of the label and adhered thereto by the adhesive 108. The smaller facestock label rectangle 148 defines a handle portion of the label unit 150, and the larger rectangle 140 defines the actual facestock label of the unit 150 on which indicia 164 is printed. A respective liner sheet 160 rectangle is adhered to this handle portion 148 of the unit 150.

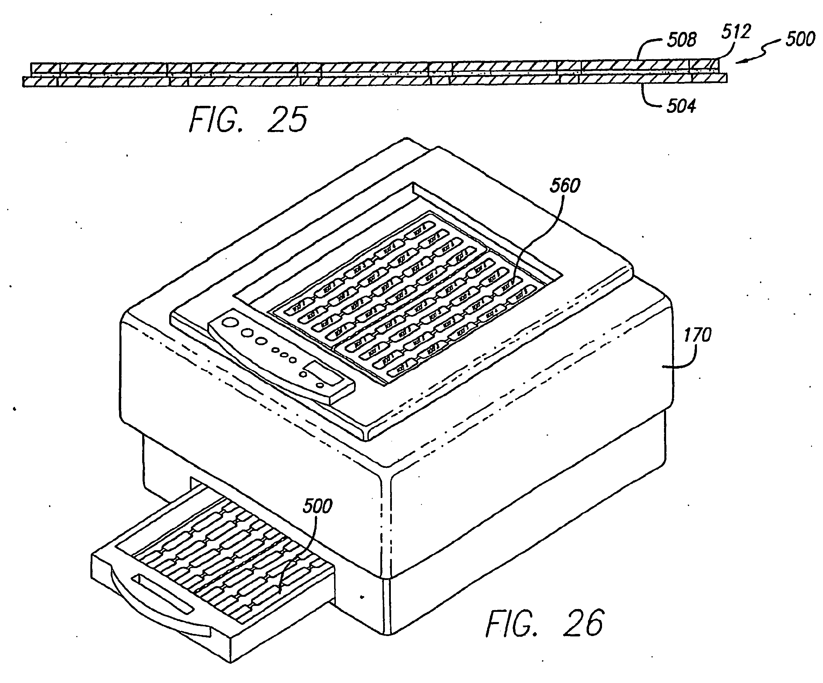

The sheet construction 100 is passed through a printer or a copier, such as shown in FIG. 26 at 170. And the desired indicia 164 are printed on the facestock label portion 140 of the unit 150. It is anticipated that all of the facestock labels 140 will be printed in a single pass through the printer 170. However, it is within the scope of the invention to print less than all of them and then pass the sheet through a second, third, or more times to print on the remaining labels. Alternatively, the user can hand write on some or all of the labels 140.

After the label 140 has been printed, or handwritten thereon, with the desired indicia 164, the label unit 150 is pulled off the rest of the sheet, as shown in FIG. 4, by the user grasping the liner sheet portion 160 and the handle portion 148 and removing them along their die cut lines from the surrounding liner sheet and facestock sheet and pulling the label portion 140 off of the underlying liner sheet with adhesive 108 remaining on the bottom portion of the label. The user then manipulates the label portion 140 into a desired position on the tab 174 by holding and manipulating the facestock handle portion and the attached liner sheet portion, as shown in FIG. 5, between his thumb 178 and forefinger 182. The label 140 is then pressed down by the user and adhered with the adhesive 108 in the desired position on the tab 174. The handle portion with liner sheet portion attached thereto are separated from the printed adhered label by tearing along the perforation line or ties 144 as shown in FIG. 6. Thereby the printed label 140 is accurately positioned by the user and without the user touching the label portion and thereby dirtying it or smudging it with body oils from the user's fingers or the user's fingers adhering to the adhesive.

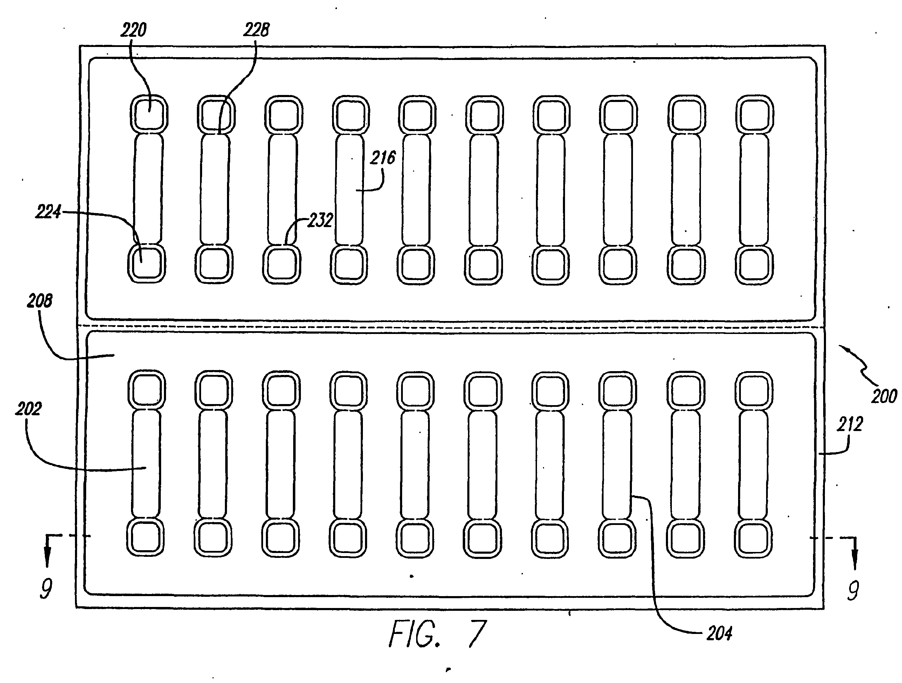

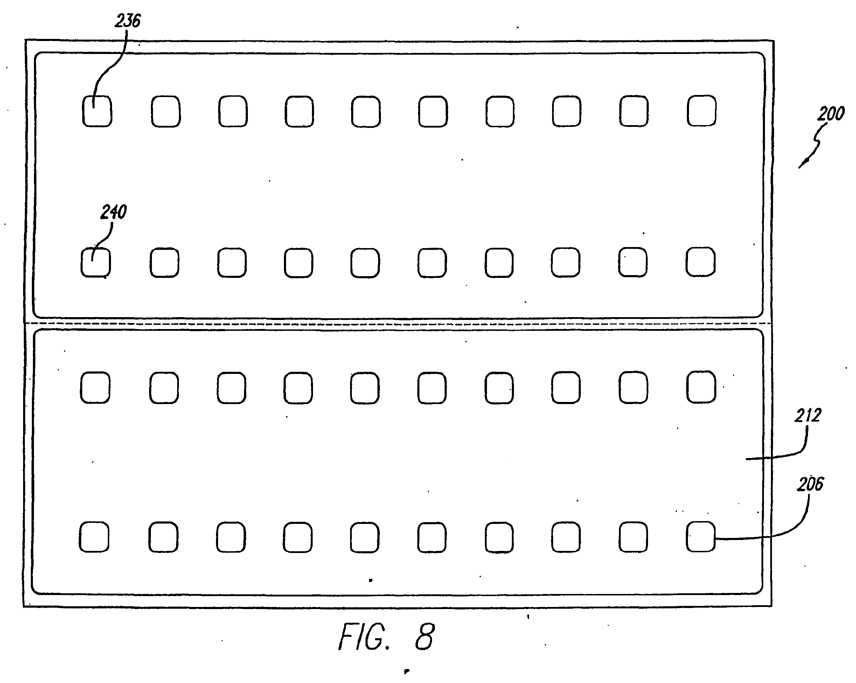

FIGS. 7 through 12 illustrate a second label applicator construction of the present invention generally at 200. It is seen therein that it is conceptually similar to the construction 100 in that removable label units 202 are defined by die cut lines 204, 206 in the facestock 208 and in the liner sheet 212, and adhesive 214 is provided between the sheets. However, instead of the facestock portion being formed by a large elongate rectangle defining the label with a smaller elongate rectangle parallel thereto along a side edge defining the handle portion, a different configuration is shown in construction FIG. 7. Although the unit 202 of FIG. 7 includes a similar elongate rectangular facestock label 216, facestock handle portions 220, 224 are formed at each end thereof and with perforation lines or ties 228, 232 between the ends of the facestock label and both of the handle portions. Similarly, liner sheet portions 236, 240 are die cut on the backs of each of the facestock handle portions 220, 224, respectively. The liner sheet portions 236, 240 have slightly smaller dimensions than the respective handle portions 220, 224, defining a thin facestock margin about the perimeter of the liner sheet portions.

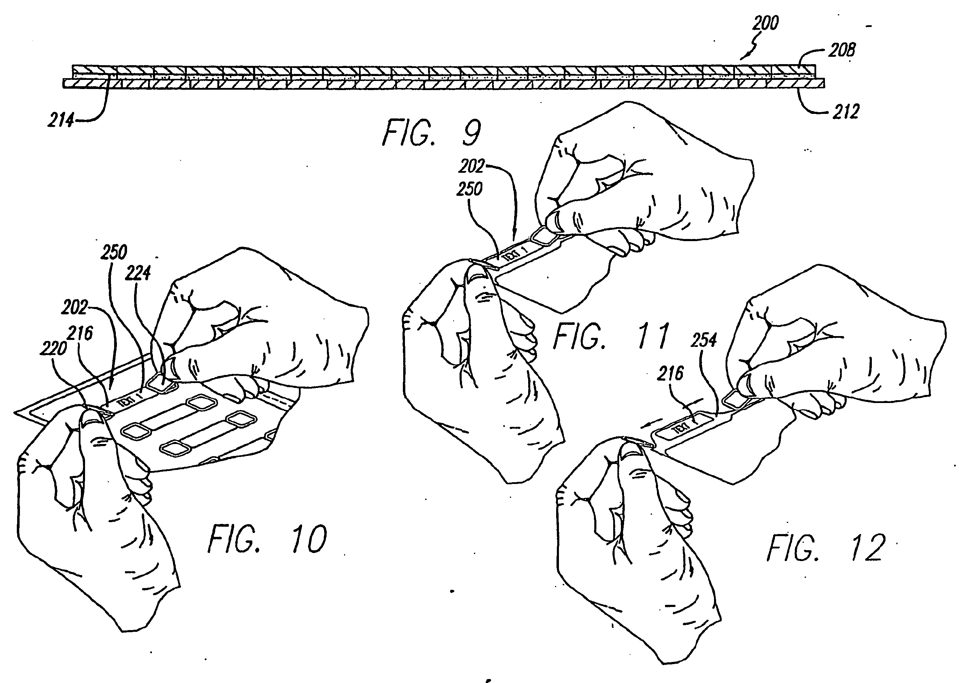

After the sheet 200 has been passed through a printer or a copier and the desired indicia 250 printed on the labels 216, as shown in FIG. 10, the two end handle portions 220, 224 and liner sheet portions 236, 240 are grasped and pulled away from the sheet and the facestock label 216 peeled off from the liner sheet 212 with a layer of adhesive on the back of the label. With the two handle portions grasped by the user, the label unit 204 is positioned such that the label 216 is in the desired position on the tab 254 as shown in FIG. 11, and the label 216 is then pressed into position. The two handle portions 220, 224 are then pulled away along the perforation lines 228, 232 from the ends of the adhered label, as depicted in FIG. 12. Thereby, similar to the sheet 100, the facestock label 216 itself is never touched by the user.

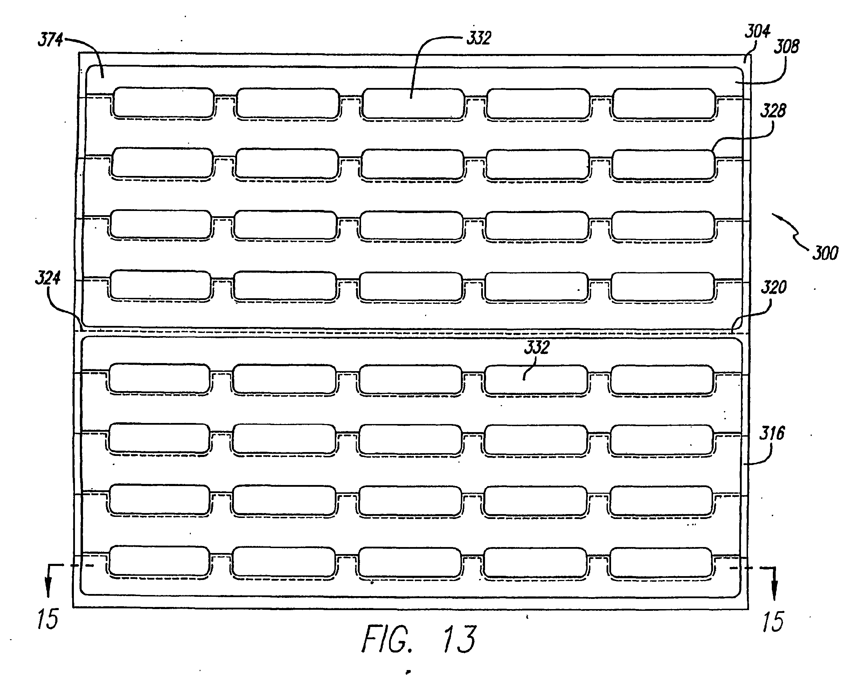

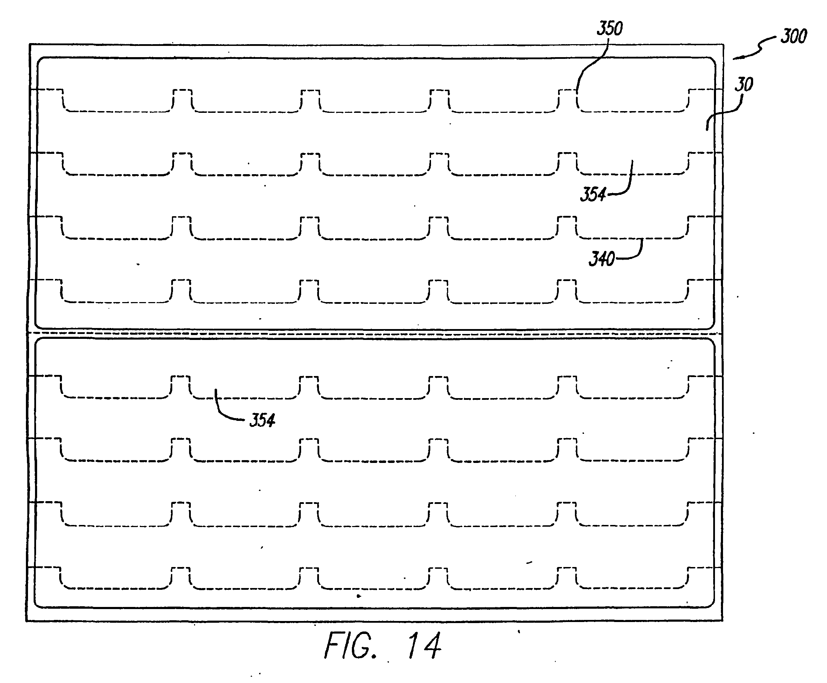

Referring to FIGS. 13 through 19, a third label applicator construction sheet of the present invention is shown generally at 300. It is seen also to comprise a liner sheet 304 and a facestock 308 attached with adhesive 312 to the face of the liner sheet. Similar to the other constructions disclosed herein, margin edges 316 of the facestock have been cut and removed as well as a center gutter portion 320 and a perforation line 324 through the liner sheet and down the middle of the liner sheet as formed. The facestock has been die cut to form lines 328 of spaced rounded corner rectangular labels 332, each connected to adjacent labels with thin strips 336 and with the die cut line extending from the end labels to the edge of the facestock. The liner sheet 304 is die cut 340 with end lines extending all the way to but spaced a small distance to form a small break-away tie at the edge of the sheet. The die cut lines extend in a distance and then extend down, across and up, parallel to the outer shape of the adjacent label but spaced outwardly a slight distance therefrom and extending out to form a small plateau 350 between adjacent labels similar to the spacing on the facestock sheet between the adjacent labels. The label liner sheet portions 354 are adhered to respective ones of the facestock labels 332 while the sheet is intact and passed through the printer or copier.

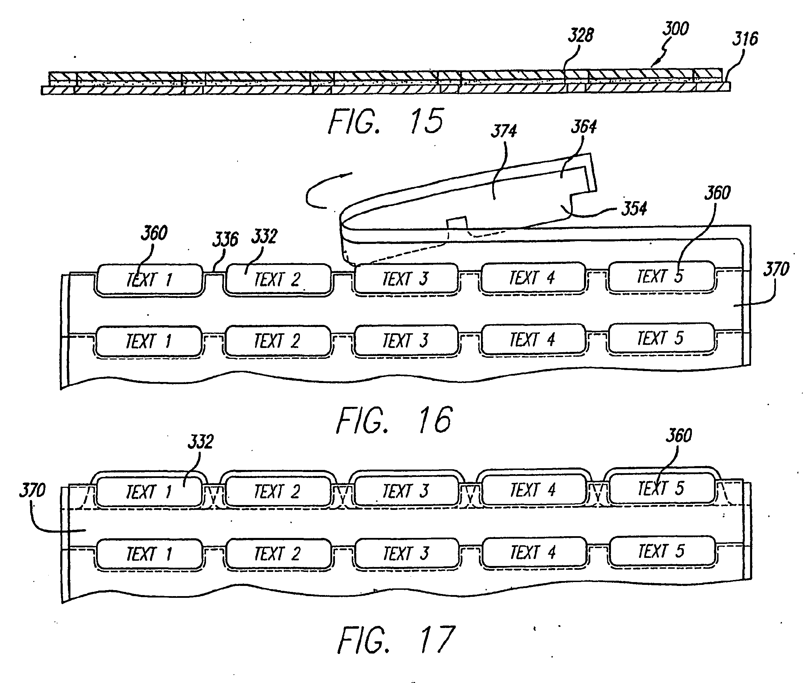

After passing therethrough and with desired indicia 360 printed on the labels 332, the liner strip 364 at the top of the sheet is pulled away and separated from the remainder portion 370 of the sheet. The liner sheet portions mentioned above are removed with the liner sheet strip together with a liner sheet bar at the top 374. This step is shown in FIG. 16. The adhesive connection between the facestock and the liner sheet and the small ties at the end of the liner sheet cut lines, hold the sheet intact and prevent the liner strip 364 from separating before it is manually pulled away by the user after the printing. When it has been pulled away, the liner sheet portions 354 on the backs of the respective facestock labels 332 are removed thereby exposing the adhesive back sides of the line of labels 332 at the top of the remaining sheet portion 370. The top row of exposed labels 332 extends a slight distance out from the top edge of the sheet. The large remaining sheet portion 370 can then be manipulated by the user into the desired position aligned with the set of tab dividers 374 or file folders with their staggered tab 378. The body portion 370 provides a strong, not flexible or flimsy, handle for manipulating and accurately positioning the top row of exposed labels onto the desired positions on the staggered tabs as shown in FIG. 17.

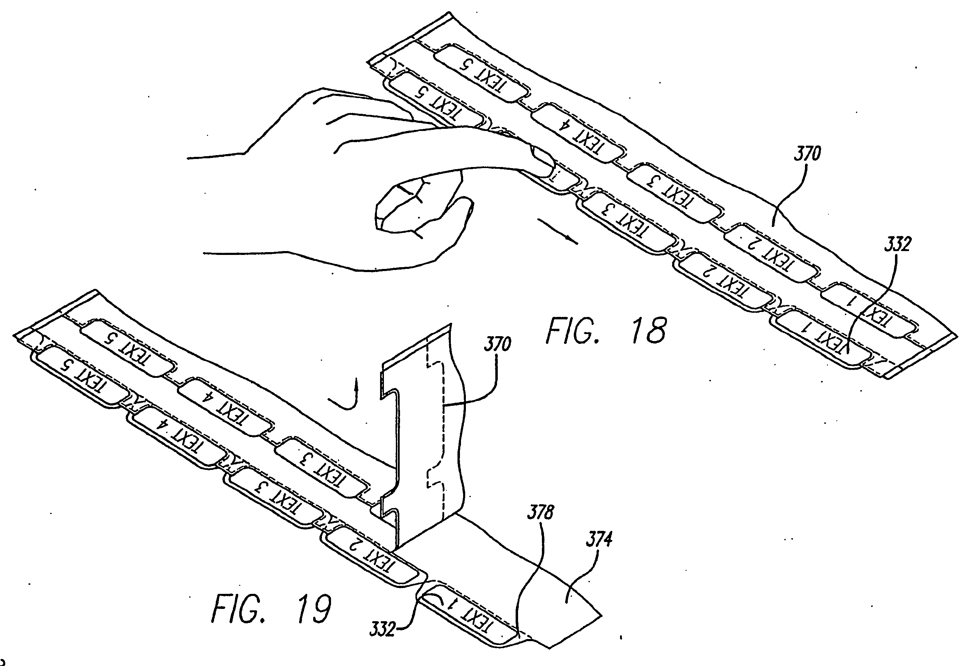

Each of the properly positioned labels 332 is then pressed flat down to form a strong adhesive bond onto the respective tabs 378 as depicted in FIG. 18. The body handle portion 370 of the sheet is then pulled away from the adhered labels 332, breaking the thin facestock ties between the adjacent labels and leaving the labels in position. Referring back to FIG. 15, the next top liner strip is removed to expose the backsides of the second line of printed labels. The second line of printed labels are then manipulated into position on a second set of staggered dividers, the labels pressed into position and the remaining smaller body portion removed. This can be understood by again viewing FIGS. 17 through 19.

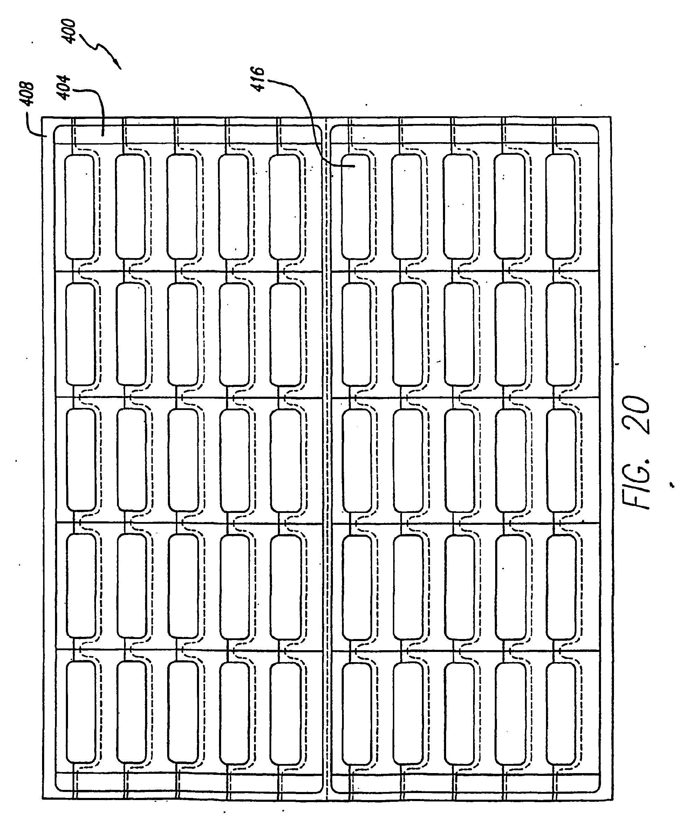

The fourth embodiment of FIG. 20, shown generally at 400, is an improvement over the embodiment of FIG. 13, and a number of small differences are apparent. It similarly includes facestock 404, liner sheet 408, adhesive, and cut lines to form labels 416, strips, etc. One of the differences is that there is an increased offset between the face and liner cuts. Also, there are more rounded corners, additional ties are provided on the faces, additional ties are provided on the liners and additional rows of labels are provided. The face cuts are provided to relax the post-laser curl in laser printers.

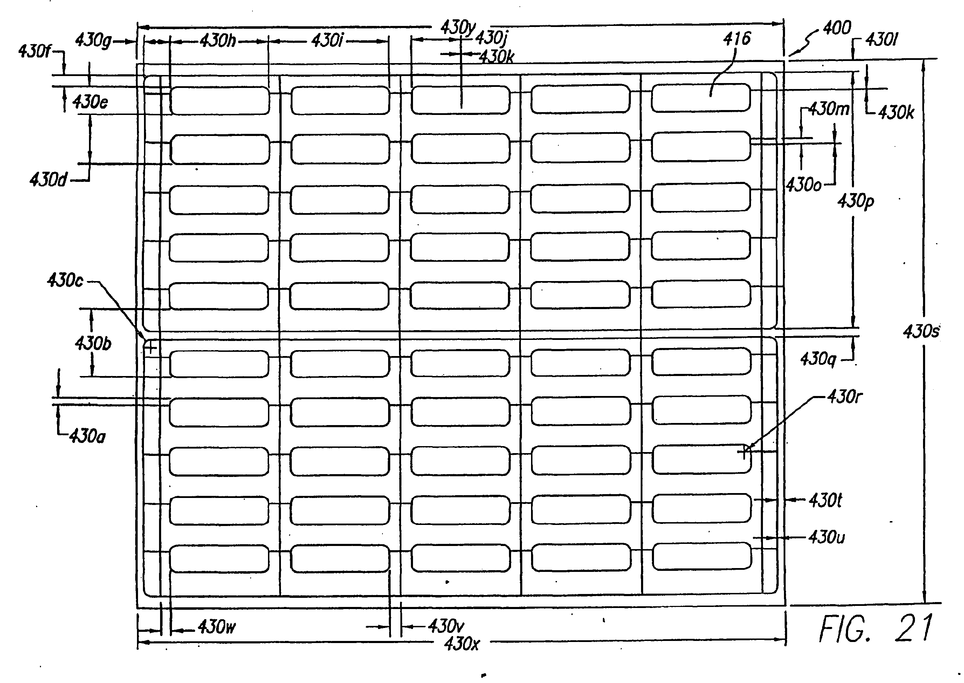

Referring to FIG. 21, preferred dimensions in mm (inches) are: 430a = 1.6 (0.063), 430b=31.8(1.251), 430c R 3.18 (R 0.125) typical, 430d=19.5 (0.750), 430e = 11.13 (0.438) typical, 430f = 5.56 (0.219), 430g = 13.9 (0.547), 430h = 42.06 (1.656) typical, 430i = 51.6 (2.031) typical, 430j = 20.92 (0.824) typical (this half of sheet only), 430k = 0.15 (0.006) first row 0.20 (0.008) second, third row; 0.25 (0.010) fourth row tie typical (this half of sheet only)), 4301 = 0.47 (0.187) ref., 430m = 2.39 (0.094) typical, 430n = 0.25 (0.010) tie typical both sides, 430o = 0.15 (0.006) tie typical both sides, 430p = 102.24 (4.025) typical, 430q = 19.5 (0.075), 430r = R 2.77 (R0.109) typical, 430s = 215.9 (8.500) web width ref., 430t = 16.2 (0.063) typical, 430u = 0.25 (0.010) tie typical both ends, 430v = 4.77 (0.188) typical, 430w = 4.77 (0.188) typical, 430x = 276.23 (10.875) and 430y = 279.40 (11.000)

It can be seen that ten cavities are provided across by five around at 42.06mm by 11.13mm (1.656 inches by. 438 inch). Five ties per cavity as are provided on one-half of the sheet, and four ties per cavity on the other half of the sheet. The two surrounding cavities are 276.23mm by 102.23mm (10.875 inches by 4.025 inches). The 0.038mm (1.5 mil) polyester face is cut through to the 0.076mm (3.0 mil) paper liner.

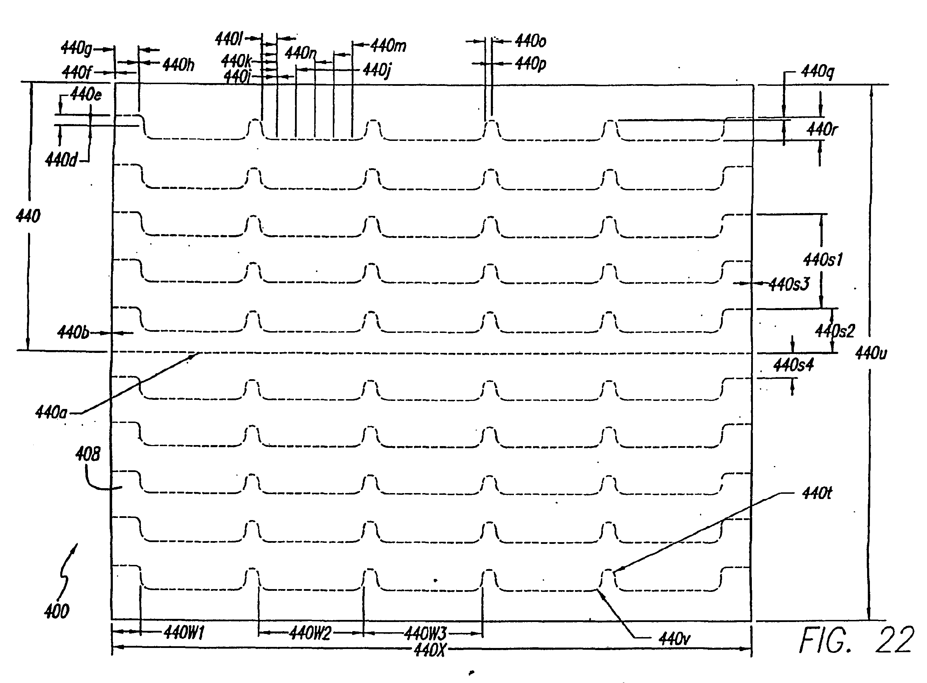

Referring to FIG. 22, preferred dimensions in mm (inches) are: 440a = 3.18 cut x 0.79 (1/8"cut x 1/32" tie), 440b = 0.79 (0.031), 440c = 107.97 (4.250), 440d = 0.381 (0.015) tie typical both ends each repeat, 440e = 5.99 (0.235) both ends, 440f = 0.79mm (0.031) tie typical, 440g= 8.54(0.366), 440h = 0.381(0.015) tie typical both ends, 440i = 0.381 (0.015) tie typical, 440j = 7.95 (0.313) typical, 440k = 15.88 (0.625) typical, 4401 = 6.17 (0.243) typical, 440m = 31.75 (1.250) typical, 440n = 23.83 (0.938) typical ; 4400 = 3.38 (0.133) typical, 440p 0.381 (0.015) tie typical, 440q = 9.53 (0.375) typical, 440r = 11.10 (0.437) typical, 440sl = 38.1 (1.500), 440s2 = 19.05 (0.750) typical, 440s3 = 0.787(0.031), 440s4 = 12.7 (0.500), 440t = R 3.18 (R0.125) typical, 440u = 215.9 (8.500) web width, 440v = R 4.78 (R0. 188) typical, 440w1 = 13.49 (0.531) typical, 440w2 = 44.45 (1.750) typical, 440w3 = 51.59 (2.031) typical, 440x = 277.83 (10.938) and 440y = 279.4 (11.000) circumference.

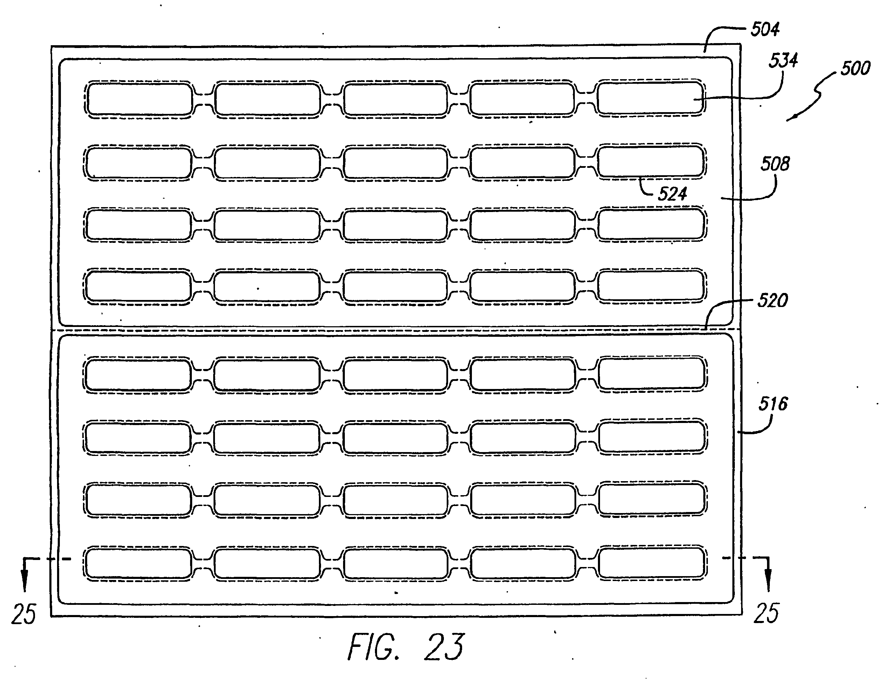

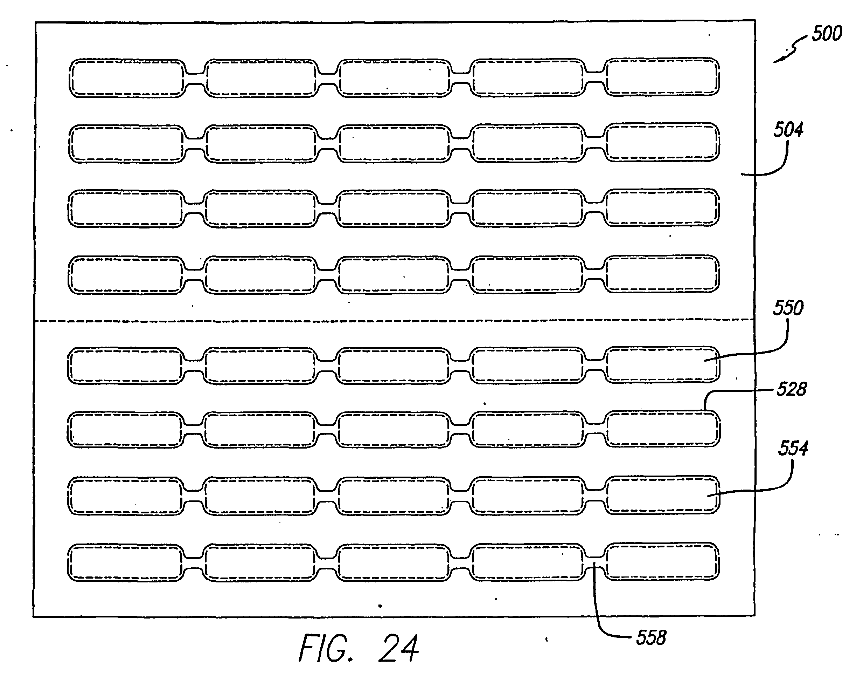

Referring to FIGS. 23 through 30, a fifth label applicator construction of the present invention is shown generally at 500. It similarly includes the back liner sheet 504 and the facestock 508 adhered to a front surface thereof with adhesive 512, as shown in FIG. 25. Similarly, margin 516 and the center gutter portion 520 of the facestock have been cut and removed. Die cut lines 524,528 are formed in both the liner sheet to but not through the facestock and through the facestock to but not through the liner sheet.

The die cut lines 524 through the facestock form parallel rows of spaced rounded rectangular labels 534. For example, as shown in FIG. 23, eight rows of five labels are formed. Thin breakable facestock necks separate adjacent labels in each row.

The die cut lines 528 in the liner sheet 504 form a plurality of liner strips 550, each of the strips is comprised of a series of rectangular liner sheet portions 554 connected at the center ends to the adjacent liner sheet portions with necks 558. Each of the liner sheet portions 554 has the same shape but with slightly larger dimensions than the underlying and attached facestock label 534. The liner sheet necks 558 provide sturdy connections between the liner sheet portions 554 such that the entire strip 550 can be removed without the liner sheet portions 554 separating. It is removed after the sheet has been passed through a printer 170 and the indicia 560 printed on the top surfaces of the facestock labels as depicted in FIG. 26.

In other words, the liner sheet strip 550 is peeled off or removed from the sheet, leaving the exposed backsides of the respective adhesive labels 534. The sheet can then be manipulated such that the exposed backsides of the labels 534 are positioned on the respective stacked and staggered tabs 570 of the dividers or file folders 574 as shown in

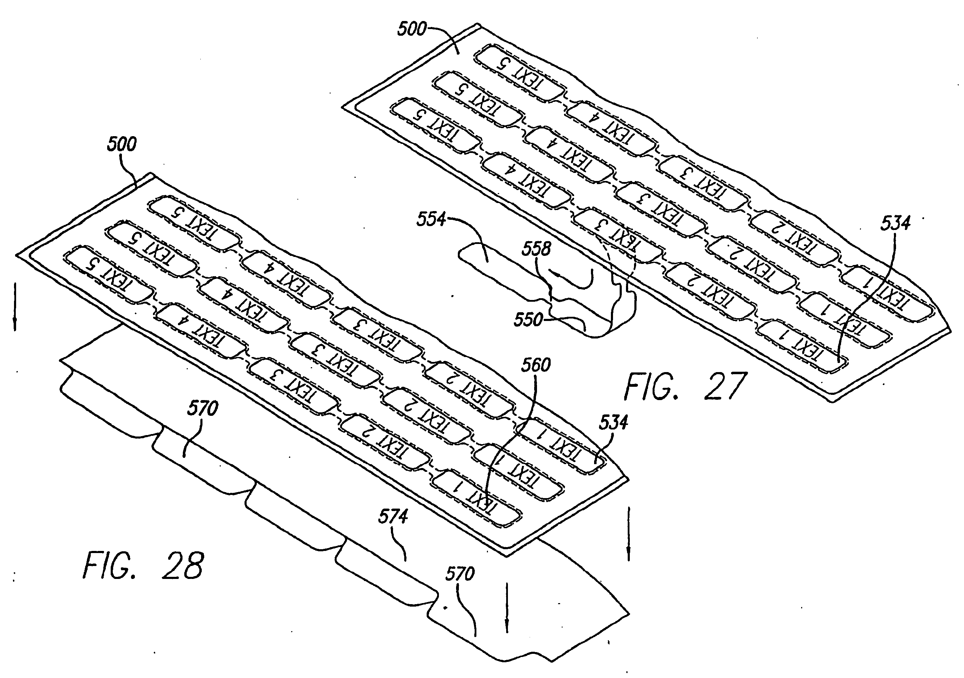

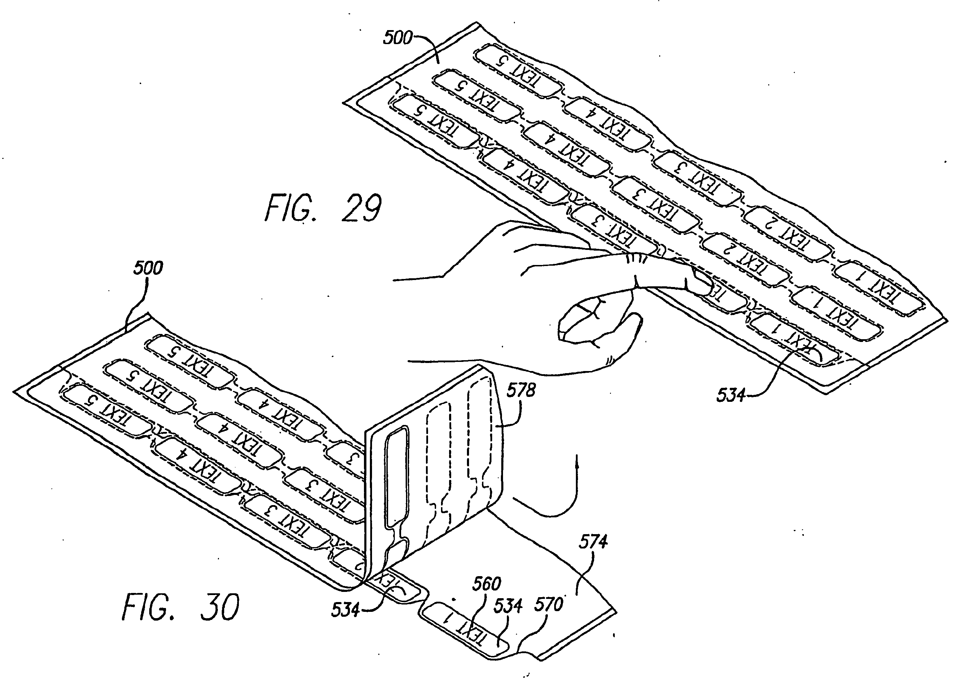

FIG. 28. The labels 534 are pressed down into position to provide a firm, straight adhesion of the labels to the tabs 570, as depicted in FIG. 29. The remainder of the sheet 578 is then pulled off of the labels 534 as shown in FIG. 30, leaving them properly applied on the tabs.

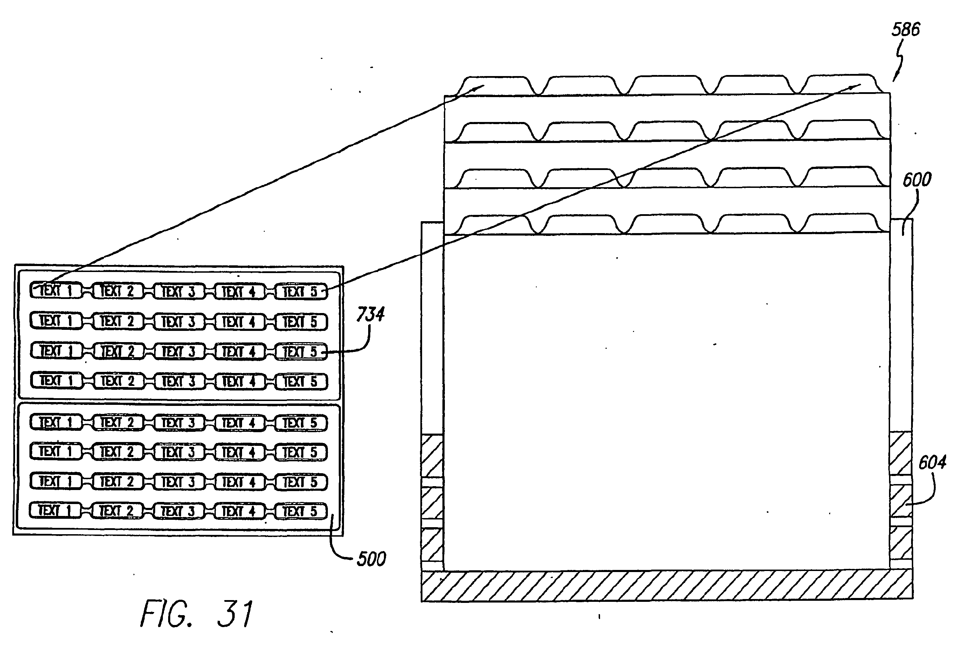

An advantage of construction of 500 is that more than one row of labels can be applied at the same time by removing more than one of the liner strips 534. A system for doing this is shown in FIG. 31, where, for example, four rows of printed labels can be applied at the same time to four sets of dividers 586. If the dividers 586 are offset or stacked in a stepped fashion relative to one another, a method for doing this consistently and accurately and holding the sets in this offset position is shown by the pouch 600 of

FIG. 31. The pouch 600 has a series of staggered pockets 604, each for holding a respective set of dividers 586.

In other words, FIG. 31 shows a system of placing four rows of labels on tab dividers in a single step. The label sheet construction can be the sheet 500, for example, or constructions as illustrated herein as would be apparent to those skilled in the art. The tab dividers 586 are placed in the unique pouch 600 of the present invention, which positions them in a staggered layout. The pouch 600 can be made from a sheet of paper with several pockets 604 of the same material, glued on the body of the pouch by adhesive. The paper will preferably be ninety pound index or higher basis weight material that can be durable as sensitive dividers are placed in and out of the pouches.

This pouch 600 speeds the label application process where numbers of different sets of dividers must be labeled as part of a single operation. This speeds the labeling operation and helps ensure accurate alignment and placement of the labels with minimal user handling.

Examples of materials usable for the label applicator constructions disclosed herein are for the clear film label for laser printers: the facestock can be 0.0381mm (1.5 mil) polyester with laser topcoating, the adhesive can be permanent acrylic adhesive, and the liner can be 0.086mm (3.4 mil) paper release liner. For the clear film label for inkjet printers, the facestock can be 0.0381 mm (1.5 mil) polyester with inkjet top coating, the adhesive can be permanent acrylic adhesive, and the liner can be 0.086mm (3.4 mil) paper release liner. Alternatives range from using ink and toner receptive facestock material to using both permanent and removable adhesives. As an example for paper labels, the facestock can be 0.102mm (4.0) mil paper facestock, the adhesive can be acrylic emulsion and the liner can be 0.071 mm (2.8 mil) paper liner.

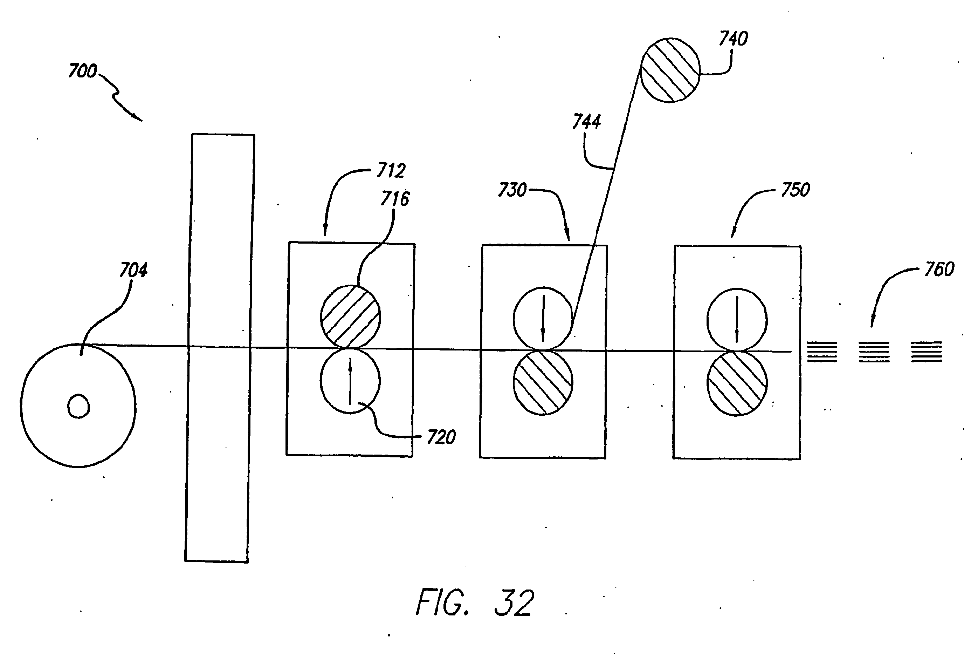

A manufacturing process of the present invention as shown schematically in FIG. 32 at 700. Referring thereto, the material is a laminate consisting of an ink and/or laser receptive top coated facestock laminated via pressure sensitive adhesive to a release coated paper liner. The facestock can be ink or toner receptive paper or film. The adhesive can be any acrylic emulsion, solvent or hot melt pressure sensitive adhesive that is permanent or removable. And the release liner is a release coated liner. It is supplied in roll form 704 for converting into label sheets. The converting operation may or may not include printing, which generally speaking is not critical to the function or application of the label product.

The material is web fed through the converting press, such as the Mark Andy 4120, so as to pass through an initial rotary die station 712 that, when and where the product requires it, cuts through the liner but not through the polyester facestock. The anvil roller 716 is on top and the cutting die 720 is below at this station, as shown in the drawing. The rotary die that is in the initial die station may or may not include a perforation blade, which makes intermittent cut through the liner along the center of the web.

The web may or may not be turned over before it is passed through a second rotary die station 730 that, where the product requires it, cuts through the polyester facestock but not through the liner. The web then passes through a matrix removal station 740 that lifts and removes a section of the face material 744 which typically includes, but is not limited to, the perimeter around the label sheet and may or may not include a strip removed from the center of the sheet that coincides with the perforation in the liner.

Finally, the web passes through a sheeting station 750, which uses one or more cross-directional blades to cut the web into individual sheets. The sheets are fed into a packaging/collating station 760, which includes a stacker, which stacks the sheets one on top of the other into predetermined count stacks. The individual stacks are either fed into a collator, or fed into a packaging area, where they are packaged in bulk for later collation with other materials.

From the foregoing detailed description, it will be evident that there are a number of changes, adaptations and modifications of the present invention which come within the province of those skilled in the art. For example, the labels, instead of being passed through a printer or copier, are written directly thereon by a pencil, pen or the like, or the labels are provided on the sheet with the indicia pre-printed. Or the labels can be unprinted color coded labels. Another alternative is for the labels when on the sheet to not have adhesive thereon but rather to be detached or removed and then attached to an adhesive surface. However, it is intended that all such variations be considered as within the scope thereof.

## Claims

1. A label applicator construction (300), comprising:
a liner sheet (304);
facestock (308) attached with adhesive to the liner sheet;
at least one liner sheet weakened line (340) through the liner sheet but not the facestock adjacent thereto;
at least one facestock weakened line (328) through the facestock but not through the liner sheet;
**characterised in that**:
the at least one facestock weakened line (328) defines at least a portion of the perimeters of a plurality of aligned facestock labels (332);
and the liner sheet weakened lines (340) allowing separation of a portion of the liner sheet from another portion to thereby so as to expose the back sides of the plurality of facestock labels (332), having the adhesive thereon, to enable a user in collectively position the plurality of facestock labels at desired locations on at least one surface and adhering thereto with the adhesive;
wherein the facestock sheet weakened (328) lines allow separation of a portion of the facestock from another portion of the facestock.

2. A label applicator construction (300) as claimed in claim 1 wherein the facestock weakened lines (328) are oriented on the facestock in a way that the plurality of facestock labels (332) defined thereby are located for alignment with the set oftabs of stacked dividers.

3. A label applicator construction (300) as claimed in claim 1 or claim 2 further comprising ties by which the facestock labels are attached to the facestock (308) after the a portion (354) of the liner sheet is separated.

4. A label applicator construction (300) as claimed in claim 1 or claim 2 wherein, with the liner sheet portion (354) separated from the other liner sheet portion, the facestock labels (332) are serially interconnected with breakable facestock thin connector strips

5. A label applicator construction (300) according to claim 1 wherein the facestock labels (332) have ink or toner receptive surfaces.

6. A label applicator construction (300) according to claim 5 wherein the adhesive is pressure sensitive adhesive and the facestock (308) is an ink and/or laser receptive top coated facestock which is laminated.

7. A label applicator construction (300) according to claim 1 wherein the liner sheet weakened line (340) comprises at least one liner sheet cut line that defines a liner sheet backing strip (354) attached to the backsides of the aligned facestock labels (332).

8. A method of constructing a label applicator construction according to any previous claim, **characterised in that** it comprises:
attaching facestock (308) with adhesive to a liner sheet (304);
after the attaching, forming cut lines through the facestock (308) but not the liner sheet (304) to form a plurality of facestock labels (332);
and after the attaching, forming cut lines through the liner sheet (304) but not the facestock (308) to form liner sheet portions (354) to, in use, assist in adhering the facestock printable labels (332) to desired surfaces with the adhesive.

9. A label application method, comprising:
providing a label applicator construction (300) according to claim 1;
separating the liner strip (354) from the liner body portion from an attached position into a separated position wherein the facestock labels (332) are connected to the liner body portion and backsides of the facestock labels are exposed;
manipulating at least one of the liner body portion and at least one surface relative to one other such that the exposed backsides of the aligned facestock labels are in a desired position relative to the at least one surface;
and with the aligned facestock labels (332) in the desired position, applying the aligned facestock labels to the at least one surface, the applying including separating the aligned face stock labels from the liner body portion.

## Patentansprüche

1. Etikettenapplikationsgerätekonstruktion (300), die aufweist:
einen Beklebebogen (304);
ein Oberflächenmaterial (308), das mit Klebstoff am Beklebebogen befestigt ist;
mindestens eine Schwächungslinie (340) des Beklebebogens durch den Beklebebogen, aber nicht durch das daran benachbarte Oberflächenmaterial;
mindestens eine Schwächungslinie (328) des Oberflächenmaterials durch das Oberflächenmaterial, aber nicht durch den Beklebebogen;
**dadurch gekennzeichnet, dass**:
die mindestens eine Schwächungslinie (328) des Oberflächenmaterials mindestens einen Abschnitt des Umfangs einer Vielzahl von ausgerichteten Facestock-Etiketten (332) definiert;
und die Schwächungslinien (340) des Beklebebogens die Trennung eines Teils des Beklebebogens von einem anderen Teil gestatten, um so die Rückseiten der Vielzahl von Facestock-Etiketten (332) mit dem Klebstoff darauf freizulegen, damit ein Benutzer in der Lage ist, die Vielzahl der Facestock-Etiketten an den gewünschten Stellen auf mindestens einer Fläche gemeinsam zu positionieren und darauf mit dem Klebstoff zum Haften zu bringen;
wobei die Schwächungslinien (328) des Oberflächenmaterials die Trennung eines Teils des Oberflächenmaterials von einem anderen Teil des Oberflächenmaterials gestatten.

2. Etikettenapplikationsgerätekonstruktion (300) nach Anspruch 1, bei der die Schwächungslinien (328) des Oberflächenmaterials auf dem Oberflächenmaterial in einer Weise ausgerichtet sind, dass die Vielzahl der dadurch definierten Facestock-Etiketten (332) für eine Ausrichtung mit der Reihe der Bezeichnungsschilder der gestapelten Trennblätter angeordnet werden.

3. Etikettenapplikationsgerätekonstruktion (300) nach Anspruch 1 oder Anspruch 2, die außerdem Verbindungsstücke aufweist, mittels denen die Facestock-Etiketten am Oberflächenmaterial (308) befestigt werden, nachdem ein Teil (354) des Beklebebogens abgetrennt ist.

4. Etikettenapplikationsgerätekonstruktion (300) nach Anspruch 1 oder Anspruch 2, bei der, wenn der Teil (354) des Beklebebogens vom anderen Teil des Beklebebogens abgetrennt ist, die Facestock-Etiketten (332) aufeinanderfolgend mit zerreißbaren, dünnen Verbinderstreifen des Oberflächenmaterials verbunden werden.

5. Etikettenapplikationsgerätekonstruktion (300) nach Anspruch 1, bei der die Facestock-Etiketten (332) Farb- oder Toneraufnahmeflächen aufweisen.

6. Etikettenapplikationsgerätekonstruktion (300) nach Anspruch 5, bei der der Klebstoff ein selbstklebender Klebstoff ist, und bei der das Oberflächenmaterial (308) ein farb- und/oder laseraufnehmendes beschichtetes Oberflächenmaterial ist, das laminiert ist.

7. Etikettenapplikationsgerätekonstruktion (300) nach Anspruch 1, bei der die Schwächungslinie (340) des Beklebebogens mindestens eine Beklebebogenschnittlinie aufweist, die einen an den Rückseiten der ausgerichteten Facestock-Etiketten (332) befestigten Unterlegstreifen (354) des Beklebebogens definiert.

8. Verfahren zum Konstruieren einer Etikettenapplikationsgerätekonstruktion nach einem der vorhergehenden Ansprüche, **dadurch gekennzeichnet, dass** es die folgenden Schritte aufweist:
Befestigen des Oberflächenmaterials (308) mit Klebstoff auf einem Beklebebogen (304);
nach dem Befestigen Ausbilden von Schnittlinien durch das Oberflächenmaterial (308), aber nicht durch den Beklebebogen (304), um eine Vielzahl von Facestock-Etiketten (332) zu bilden;
und nach dem Befestigen Ausbilden von Schnittlinien durch den Beklebebogen (304), aber nicht durch das Oberflächenmaterial (308), um Teile (354) des Beklebebogens zu bilden, um bei Benutzung das Haften der bedruckbaren Facestock-Etiketten (332) auf den gewünschten Flächen mit dem Klebstoff zu unterstützen.

9. Eükettenapplikationsverfahren, das die folgenden Schritte aufweist:
Bereitstellen einer Etikettenapplikationsgerätekonstruktion (300) nach Anspruch 1;
Abtrennen des Beklebestreifens (354) vom Beklebebogenhauptteil aus einer befestigten Position in eine abgetrennte Position, bei der die Facestock-Etiketten (332) mit dem Beklebebogenhauptteil verbunden sind und die Rückseiten der Facestock-Etiketten freigelegt werden;
Handhaben von mindestens einem von Beklebebogenhauptteil und mindestens einer Fläche relativ zueinander, so dass die freigelegten Rückseiten der ausgerichteten Facestock-Etiketten in einer gewünschten Position relativ zu der mindestens einen Fläche sind;
und, wenn sich die ausgerichteten Facestock-Etiketten (332) in der gewünschten Position befinden, Aufbringen der ausgerichteten Facestock-Etiketten auf die mindestens eine Fläche, wobei das Aufbringen das Abtrennen der ausgerichteten Facestock-Etiketten vom Beklebebogenhauptteil umfasst.

## Revendications

1. Structure d'application d'étiquettes (300), comprenant :
une feuille de revêtement (304) ;
une pellicule frontale (308), fixée par un adhésif sur la feuille de revêtement ;
au moins une ligne de faiblesse de la feuille de revêtement (340), traversant la feuille de revêtement, mais non pas la pellicule frontale qui y est adjacente ;
au moins une ligne de faiblesse de la pellicule frontale (328), traversant la pellicule frontale, mais non pas la feuille de revêtement ;
**caractérisée en ce que**
la au moins une ligne de faiblesse de la pellicule frontale (328) définit au moins une partie des périmètres de plusieurs étiquettes à pellicule frontale alignées (332) ;
et les lignes de faiblesse de la feuille de revêtement (340) permettant la séparation d'une partie de la feuille de revêtement d'une autre partie, pour exposer ainsi les côtés arrière des plusieurs étiquettes à pellicule frontale (332), comportant l'adhésif qui y est appliqué, pour permettre à un utilisateur de positionner collectivement les plusieurs étiquettes à pellicule frontale au niveau d'emplacements voulus sur au moins une surface et de les faire adhérer à celle-ci par l'intermédiaire de l'adhésif;
les lignes de faiblesse de la feuille de pellicule frontale (328) permettant la séparation d'une partie de la pellicule frontale d'une autre partie de la pellicule frontale.

2. Structure d'application d'étiquettes (300) selon la revendication 1, dans laquelle les lignes de faiblesse de la pellicule frontale (328) sont orientées sur la pellicule frontale de sorte que les plusieurs étiquettes à pellicule frontale (332) ainsi définies sont agencées en vue de permettre un alignement avec le groupe de pattes d'intercalaires empilés.

3. Structure d'application d'étiquettes (300) selon les revendications 1 ou 2, comprenant en outre des attaches servant à fixer les étiquettes à pellicule frontale sur la pellicule frontale (308) après la séparation d'une partie (354) de la feuille de revêtement.

4. Structure d'application d'étiquettes (300) selon les revendications 1 ou 2, dans laquelle, après la séparation de la partie de la feuille de revêtement (354) de l'autre partie de la feuille de revêtement, les étiquettes à pellicule frontale (332) sont interconnectées en série avec de fines bandes de pellicule frontale frangibles.

5. Structure d'application d'étiquettes (300) selon la revendication 1, dans laquelle les étiquettes à pellicule frontale (332) comportent des surfaces de réception d'encre ou de toner.

6. Structure d'application d'étiquettes (300) selon la revendication 5, dans laquelle l'adhésif est un adhésif autocollant, la pellicule frontale (308) étant une pellicule frontale à revêtement supérieur réceptif d'encre et/ou de laser, qui est stratifiée.

7. Structure d'application d'étiquettes (300) selon la revendication 1, dans laquelle la ligne de faiblesse de la feuille de revêtement (340) comprend au moins une ligne de coupe de la feuille de revêtement, définissant une bande de support (354) fixée sur les côtés arrière des étiquettes à pellicule frontale alignées (332).

8. Procédé de construction d'une structure d'application d'étiquettes selon l'une quelconque des revendications précédentes, **caractérisé en ce qu'**il comprend les étapes ci-dessous :
fixation de la pellicule frontale (308) par un adhésif sur une feuille de revêtement (304) ;
après la fixation, formation de lignes de coupe à travers la pellicule frontale (308), mais non pas à travers la feuille de revêtement (304), pour former plusieurs étiquettes à pellicule frontale (332) ;
et après la fixation, formation de lignes de coupe à travers la feuille de revêtement (304), mais non pas à travers la pellicule frontale (308), pour former des parties de la feuille de revêtement (354) destinées à faciliter en service l'adhésion des étiquettes imprimables à pellicule frontale (332) sur les surfaces voulues par l'intermédiaire d'un adhésif.

9. Procédé d'application d'étiquettes, comprenant les étapes ci-dessous :
fourniture d'une structure d'application d'étiquettes (300) selon la revendication 1 ;
séparation de la bande de revêtement (354) de la partie du corps de revêtement, d'une position fixée vers une position séparée, dans laquelle les étiquettes à pellicule frontale (332) sont connectées à la partie du corps de revêtement, les côtés arrière des étiquettes à pellicule frontale étant exposés ;
manipulation d'au moins une partie du corps de revêtement et d'au moins une surface par rapport à une autre, de sorte que les côtés arrière exposés des étiquettes à pellicule frontale alignées se trouvent dans une position voulue par rapport à la au moins une surface ;
et les étiquettes à pellicule frontale alignées (332) se trouvant dans la position voulue, application des étiquettes à pellicule frontale alignées sur au moins une surface, l'étape d'application englobant la séparation des étiquettes à pellicule frontale alignées de la partie du corps de revêtement.
